# EUROPEAN PATENT SPECIFICATION

(11) **EP 0 738 653 B1**
(45) Date of publication and mention of the grant of the patent: **16.05.2001**
(21) Application number: 96106024.1
(22) Date of filing: 17.04.1996
(51) Int. Cl.: B62M 23/02

(54) **Electric power assisted bicycle**
Fahrrad mit elektromotorischem Hilfsantrieb
Bicyclette à assistance électrique

(30) Priority: 17.04.1995 JP 9119795; 24.10.1995 JP 30076695
(43) Date of publication of application: 23.10.1996
(73) Proprietor: HONDA GIKEN KOGYO KABUSHIKI KAISHA, Minato-ku Tokyo (JP)
(72) Inventor: Kumagai, Chiaki, Wako-shi, Saitama (JP); Honda, Satoshi, Wako-shi, Saitama (JP); Nakazawa, Yoshihiro, Wako-shi, Saitama (JP); Toriyama, Masayuki, Wako-shi, Saitama (JP); Cho, Toshiyuki, Wako-shi, Saitama (JP)
(74) Representative: Liska, Horst, Dr.-Ing.

(56) References cited:
- EP-A- 0 517 224
- EP-A- 0 569 954
- GB-A- 2 121 971

## Description

This invention relates to an electric power assisted bicycle according to the preamble part of claim 1.

For an electric power assisted bicycle wherein a human power driving system and an electric driving system are provided in parallel and the output power of the electric driving system is controlled in response to a variation of the leg-power, a technique wherein, when the operation of a movable element of leg-power detection means is not smooth and a condition in which the leg-power is higher than a reference value set in advance continues for more than a fixed period of time, the output power of the electric driving system is limited so that unnecessary output power of the electric driving system may not be generated to prevent degradation of the driving feeling is proposed in the official gazette of Japanese Patent Laid-Open No. Hei 5-310177.

In an ordinary running condition such as upon running on a flat road, the leg-power to a bicycle varies cyclically such that it exhibits almost zero at the top dead center and the bottom dead center of a pedal.

In such a condition, when the leg-power exceeds a reference value continuously for a fixed period of time, it is discriminated that the operation of the leg-power detection system is not normal, and occurrence of unnecessary assistance can be prevented.

However, when the bicycle is continuously pedaled upon running on an upward slope or the like, the leg-power may not cyclically exhibit almost zero, and there is the possibility that the assistance may be stopped upon running on an upward slope or the like.

Since stoppage of the assistance upon running on an upward slope or the like can be eliminated to some degree by setting the reference value to a rather high level, there is a subject in that this makes it rather difficult to detect operation of the leg-power detection system which is not normal.

Further, where the electric power assisted bicycle is of the construction wherein the assistance is performed when the leg-power detected exceeds a reference value, there is another subject in that, if the reference value is set to a rather high level, the period within which the assistance is performed decreases, and the driving feeling is deteriorated.

Furthermore, when a leg-power acts during stopping of the electric power assisted bicycle and exceeds a reference value, even if the driver does not require assistance, the bicycle is assisted so that it may be started.

On the other hand, if a case wherein the electric power assisted bicycle is pushed by a walking person to travel on an upward slope or with a heavy load carried thereon (such running of a bicycle will be hereinafter referred to as "pushed travel") is considered, although the bicycle has an assisting function, it is heavy similarly as with a conventional bicycle, and it is desired that the assisting function is made the most of also upon pushed travel of the bicycle.

Furthermore, since the electric power assisted bicycle is driven from a battery power supply (nominal 24 V), since the voltage is higher than 24 V in a sufficiently charged up condition of the battery power supply whereas the voltage is lower than 24 V when an assisting condition continues, the assistance amount is varied by the voltage of the battery power supply, and there is a subject in that deterioration of the driving feeling is invited.

From EP-A-0 569 954 an electric power assisted bicycle according to the preamble part of claim 1 is known. In this bicycle the leg-power is currently detected and, based upon the detection, a pedal assist value is determined based on which the motor is driven. Furthermore the currently detected leg-power is compared with a previously detected leg-power for determination whether the leg-power is increasing or decreasing. By this comparison the sign of the change in pedal force is determined whereby the pedal cycle time can be measured. Based on the pedal cycle time measured, it is determined whether a failure occurs within the system in case of which the power assist is deactivated. This system starts driving the assist motor when the currently detected leg-power exceeds a threshold value. Therefore, in case of a malfunction of the leg-power detection means or if leg-power acts on the pedal although the bicycle is stopped, it is possible that assisting power is supplied by the assist motor even though the driver of the bicycle does not want to start driving.

From EP-A-0 517 224 a further electric power assisted bicycle which is similar to that of the preamble part of claim 1 is known.

Moreover, known from GB-A-2 121 971 is a system for evaluating a battery state of charge in an electric power assisted bicycle for monitoring the charge in the battery and for adapting the current supply to the motor in accordance with the actual battery state of charge.

The present invention has been made to solve such subjects as described above, and it is a first object of the present invention to provide an electric power assisted bicycle of the fail-safe type wherein assistance is performed effectively also upon running on an upward slope or the like and, when the operation of a leg-power detection system is not normal, unnecessary assistance is prevented from being performed.

It is a second object of the present invention to provide an electric power assisted bicycle which can keep its stopping condition even when a leg-power acts during stopping of the bicycle.

It is a third object of the present invention to provide an electric power assisted bicycle of improved convenience wherein assistance is performed also upon pushed travel on an upward slope or with a heavy load carried thereon.

It is a fourth object of the present invention to provide an electric power assisted bicycle wherein the assistance amount can be kept equal for an equal leg-power irrespective of fluctuation of a battery power supply and which can provide a good driving feeling.

In order to solve the subjects described above, an electric power assisted bicycle with the features according to claim 1 is proposed.

If the bicycle is pedaled by human power, then a variation occurs with the leg-power, and when the leg-power is varying with respect to time, the pedaling discrimination means discriminates that the bicycle is in a pedaled condition, and permits supply of assisting power from the motor.

When the bicycle is being pedaled, assisting power is supplied. Since the leg-power power does not exhibit a variation in a condition wherein the bicycle is not pedaled, the pedaling discrimination means does not permit supply of auxiliary power. Consequently, the assisting power is not supplied irrespective of the magnitude of the leg-power detected by the leg-power detection means.

Accordingly, even if the operation of the leg-power detection system is not normal and a leg-power detection output higher than the reference value ( assistance starting threshold value) is generated, unnecessary assisting power is not supplied at all.

As described above, since the electric power assisted bicycle according to the invention is constructed such that supply of assisting power from the motor is permitted based on a variation with respect to time of the leg-power detected by the leg-power detection means, when the leg-power is varying with respect to time, it is discriminated that the bicycle is being pedaled, and assisting power is supplied from the motor.

In other words, while the bicycle is being pedaled, assisting power is supplied and running of the bicycle is assisted by the assisting power. When the bicycle is not being pedaled, since the leg-power does not exhibit a variation, even if the leg-power detected by the leg-power detection means has a high value, no assisting power is supplied.

Accordingly, even if operation of the leg-power detection system is not normal and a leg-power detection output higher than the assistance starting threshold value is generated, unnecessary assisting power is not supplied at all.

An electric power assisted bicycle according to claim 3 is characterized in that it further comprises delay timer means for keeping the discrimination output of a condition in which the electric power assisted bicycle is being pedaled for a time after it is discriminated that the electric power assisted bicycle is not in a pedaled condition until a predetermined delay time elapses.

Where the electric power assisted bicycle is constructed such that it comprises delay timer means and the discrimination output in a condition wherein the bicycle is being pedaled is kept for a time after a point of time at which the bicycle is not in a pedaled condition until a predetermined delay time elapses, assistance can be performed continuously while the bicycle is continued to be pedaled.

Accordingly, even if the leg-power has a value lower than the reference value (assistance starting threshold value), assisting power corresponding to the detected leg-power can be supplied, and the driving feeling can be further improved.

Further, when the operation of the leg-power detection system is not normal and the leg-power detection output does not reduce to zero even if pedaling is stopped, the assistance is stopped after elapse of the delay time, and consequently, unnecessary assistance does not continue at all.

In the electric power assisted bicycle according to claim 3, since assist permission means is constructed such that it stops outputting of assist permission after lapse of the predetermined delay time after a point of time at which it is discriminated that the bicycle is not being pedaled, while the bicycle is continued to be pedaled, assistance can be performed continuously.

Accordingly, even if the leg-power has a value lower than the assistance starting threshold value, assisting power corresponding to the detected leg-power can be supplied, and the driving feeling can be further improved.

Even when operation of the leg-power detection system is not normal and the leg-power detection output does not reduce to zero even if pedaling is stopped, the assistance is stopped after elapse of the delay time set by the stopping delay timer means, and consequently, unnecessary assistance does not continue at all.

The main control section according to claim 4 is characterized in that it includes torque value correction means for correcting a torque zero point value based on the discrimination output when the pedaling discrimination means discriminates a condition wherein the electric power assisted bicycle is being pedaled, and a deviation between a torque detected by the leg-power detection means and the corrected torque zero point value is used as a corrected torque.

Since the main control section includes torque value correction means for correcting a torque zero point value based on the discrimination output when the pedaling discrimination means discriminates a condition wherein the electric power assisted bicycle is being pedaled and a deviation between a torque detected by the leg-power detection means and the corrected torque zero point value is used as a corrected torque, when a condition wherein the bicycle is not pedaled is discriminated, the torque zero point value can be set to a high value so that, even if a comparatively high leg-power acts upon stopping of the bicycle, the assistance can be inhibited to keep the stopping condition.

The main control section according to claim 4 includes torque value correction means for correcting a torque zero point value based on the discrimination output when the pedaling discrimination means discriminates a condition wherein the electric power assisted bicycle is being pedaled, and a deviation between a torque detected by the leg-power detection means and the corrected torque zero point value is used as a corrected torque. Consequently, when a condition wherein the bicycle is not pedaled is discriminated, the torque zero point value can be set to a high value, and even if a comparatively high leg-power acts upon stopping of the bicycle, the assistance can be inhibited to keep the stopping condition. Accordingly, the bicycle is assisted only when the driver treadles a pedal strongly intending running of the bicycle.

The torque value correction means, which is in the following also called torque signal correction means, according to claim 5 is characterized in that it includes torque value attenuation means (in the following also called torque signal attenuation means) for gradually decreasing the torque zero point value from that in a condition wherein the electric power assisted bicycle is not pedaled to that in another condition wherein the electric power assisted bicycle is pedaled in a predetermined time.

Since the torque value correction means includes torque value attenuation means for gradually decreasing the torque zero point value from that in a condition wherein the electric power assisted bicycle is not pedaled to that in another condition wherein the electric power assisted bicycle is pedaled in a predetermined time, the assistance amount upon transition from a stopping condition to a running condition can be increased gradually.

Accordingly, the assistance upon transition from stopping to running of the bicycle can be made natural to improve the driving feeling of the bicycle.

The main control section according to claim 6 is characterized in that it includes pushed travel mode driving means, and the motor is driven by a motor driving signal of a predetermined duty cycle based on information from a pushed travel switch.

Since the main control section includes pushed travel mode driving means and the motor is driven by a motor driving signal of a predetermined duty cycle based on information from a pushed travel switch, the electric power assisted bicycle can be assisted so that it may travel at a speed equal to a walking speed.

Accordingly, also when the bicycle is pushed to travel on an upward slope or with a heavy load carried thereon, the assisting function can be made use of to improve the convenience.

The pushed travel mode driving means according to claim 7 is characterized in that it includes driving signal increasing means for gradually increasing the motor driving signal in a predetermined time.

Since the pushed travel mode driving means includes driving signal increasing means for gradually increasing the motor driving signal in a predetermined time, even if the pushed travel switch is depressed, the bicycle does not immediately enter a pushed travel mode, but the assistance amount is increased gradually. Consequently, a natural pushed travel mode can be realized.

Accordingly, a natural pushed travel mode can be realized, and the feeling upon pushed travel can be improved.

The main control section according to claim 8 is characterized in that it includes coefficient setting means for correcting a duty cycle of a motor driving signal based on a deviation between a battery power supply and a standard voltage.

Since the main control section includes coefficient setting means for correcting a duty cycle of a motor driving signal based on a deviation between a battery power supply and a standard voltage, by controlling the pulse width of the driving signal such that, if the battery power supply becomes high, then the pulse width of the driving signal is reduced, but if the battery power supply becomes low, then the pulse width of the driving signal is increased, an assistance amount equal to that when the battery power supply exhibits a nominal value can be caused to act.

Accordingly, even if the battery power supply varies, the stability in assistance can be improved.

Accordingly, an electric power assisted bicycle which is high in convenience owing to provision of a pushed travel mode and superior in driving feeling and realizes a stabilized assistance performance can be provided.

In the following, an embodiment of the present invention will be described with reference to the accompanying drawings, wherein Fig. 1 to 14 and the corresponding description show the technology, useful for the understanding of the invention.

FIG. 1 is a side elevational view of an electric power assisted bicycle according to the present invention.

FIG. 2 is a side elevational view of a front frame portion.

FIG. 3 is a side elevational view, partly broken, of a battery case assembly.

FIG. 4 is a side elevational view showing a detailed structure of a front side fixing portion of the battery case assembly.

FIG. 5 is another side elevational view showing a detailed structure of the front side fixing portion of a battery case.

FIG. 6 is a side elevational sectional view showing a rear portion mounting structure of the battery case assembly.

FIG. 7 is a side elevational view of a motor side connector.

FIG. 8 is a front elevational view of the motor side connector.

FIG. 9 is a plan view of the motor side connector.

FIG. 10 is an enlarged view of a positioning projection.

FIG. 11 is a front elevational view of a battery side connector.

FIG. 12 is a rear elevational view of the battery side connector.

FIG. 13 is a plan view of the battery side connector.

FIG. 14 is a side elevational sectional view of the battery side connector.

FIG. 15 is a schematic structural view of a transmission and leg-power detection means.

FIG. 16 is a functional block constructive view of a control unit according to claims 1 and 2.

FIG. 17 is a time chart illustrating an example of a variation of the leg-power with respect to time.

FIG. 18 is a time chart illustrating a relationship between the period of pedaling and the delay time.

FIG. 19 is a flow chart illustrating operation of the main control section according to claim 1 and 2.

FIG. 20 is a time chart illustrating a relationship between the leg-power and the assisting force.

FIG. 21 is a time chart illustrating operation of a motor driving limitation section.

FIG. 22 is a circuit constructive view showing a concrete example of the control unit.

FIG. 23 is an explanatory view of a correction torque (TH) with respect to a torque (T) of torque signal correction means.

FIG. 24 is a flow chart illustrating operation of motor driving control means according to claims 3 and 4.

FIG. 25 is a pushed travel switch arrangement diagram on a steering handlebar.

FIG. 26 is an enlarged rear elevational view of the pushed travel switch according to the present invention.

FIG. 27 is an enlarged front elevational view of the pushed travel switch.

FIG. 28 is a functional block constructive view of essential part of the main control section according to claims 5 and 6.

FIG. 29 is a functional block constructive view of essential part of the main control section according to claim 7.

FIG. 30 is a characteristic diagram of a battery deviation voltage (ΔE) and a coefficient (α).

FIG. 31 is a characteristic diagram of a battery voltage (EO) and a coefficient (KVT) for changing a duty cycle.

FIG. 32 is a flow chart illustrating operation of the main control section according to claims 5 to 7.

FIG. 33 is a time characteristic diagram of a motor driving signal (PW) of driving signal increasing means.

FIG. 34 is a relation diagram of a bicycle speed and an assisting torque.

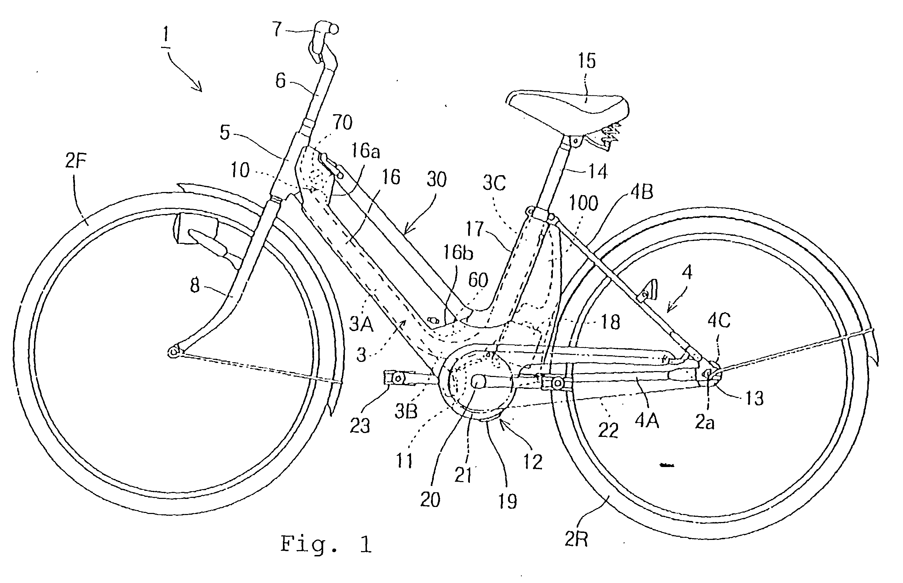

FIG. 1 is a side elevational view of an electric power assisted bicycle according to the present invention.

The electric power assisted bicycle 1 includes a front frame 3 having a V-shaped profile as viewed in side elevation and provided between a front wheel 2F and a rear wheel 2R, and a rear frame 4 for supporting the rear wheel 2R. The front frame 4 includes a main frame 3A extending linearly obliquely downwardly rearwards from a head tube 5, an intermediate portion 3B curved downwardly, and a seat frame 3C extending substantially vertically upwardly and downwardly. The rear frame 4 includes a rear fork 4A, a rear stay 4B and a bracket 4C.

A steering shaft 6 is fitted for rotation in the head tube 5, and a steering handle bar 7 is integrally mounted at an upper end of the steering shaft 6 while the front wheel 2F is supported for rotation at a lower end of a front fork 8 which extends integrally downwardly from the steering shaft 6.

A battery case assembly 30 having a substantially equal length to that of the main frame 3A is removably mounted on the main frame 3A between a front side fixing portion 10 and a motor side connector 60.

It is to be noted that reference numeral 70 denotes a locking apparatus.

An assisting power apparatus 12 is supported on the intermediate portion 3B of the front frame 3 with a hanger plate 11 interposed therebetween.

The rear fork 4A having a front end attached to the assisting power apparatus 12 extends substantially horizontally rearwards, and a rear end portion thereof is coupled by the bracket 4C together with rear end portions of the pair of left and right rear stays 4B which extend obliquely downwardly from an upper end portion of the seat frame 3C.

An axle 2a of the rear wheel 2R and a driven sprocket wheel 13 are supported for rotation by the bracket 4C.

A saddle seat 15 is supported at an upper end portion of the seat frame 3C via a seat post 14, and the circumferences of the front frame 3 and the assisting power apparatus 12 are covered with a body cover 16.

The body cover 16 has a leftwardly and rightwardly divided structure. A front end portion of the body cover 16 covers over the front side fixing portion 10 and a front portion of the battery case assembly 30.

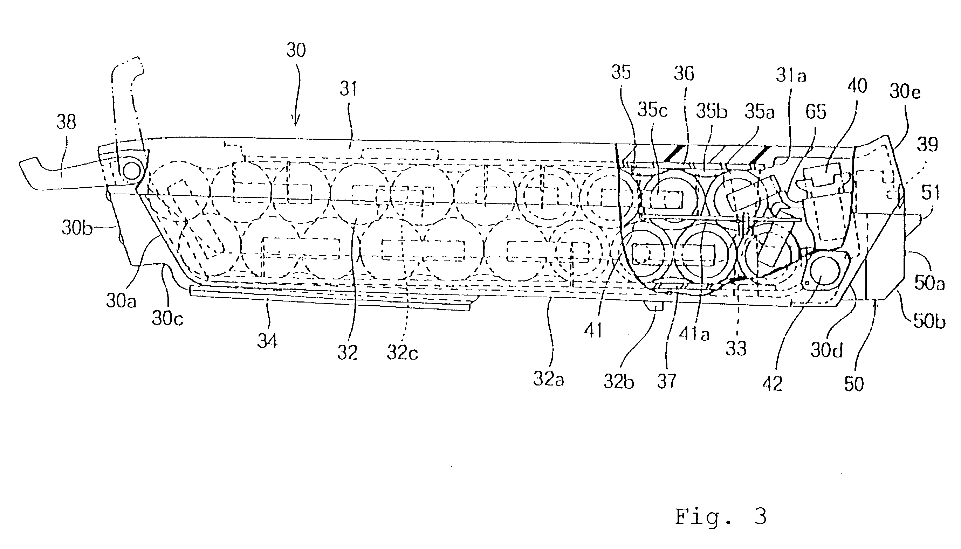

A slant face wall 16a is formed at the portion of the body cover 16 which covers over the front portion of the battery case assembly 30. The slope of the slant face wall 16a is equal to the slope of a pair of stepped portions (reference character 30a in FIG. 3) formed at the opposite side portions of the front end of the battery case assembly 30.

Further, the body cover 16 has a slant face wall 16b formed thereon with which a rear end portion of the battery case assembly 30 contacts.

The body cover 16 has a structure wherein it has an opening forwardly of a forward portion of the seat frame 3C and the opening is closed up with a front face panel 17.

The assisting power apparatus 12 includes a control unit 100, a motor 18 and a transmission 19. A crankshaft 20 which is the output power shaft of the transmission 19 is rotated integrally with a driving sprocket wheel 21 and rotates the driven sprocket wheel 13 of the rear wheel 2R via a chain 22.

A pair of pedals 23 to be driven by human power by treadling are mounted on the crankshaft 20. The motor 18 is driven to rotate by electric power supplied from batteries in the battery case assembly 12 to generate assisting power.

The control unit 100 controls operation of the motor 18 based on a torque from the pedals 23 and the speed of rotation of the driving sprocket wheel 21.

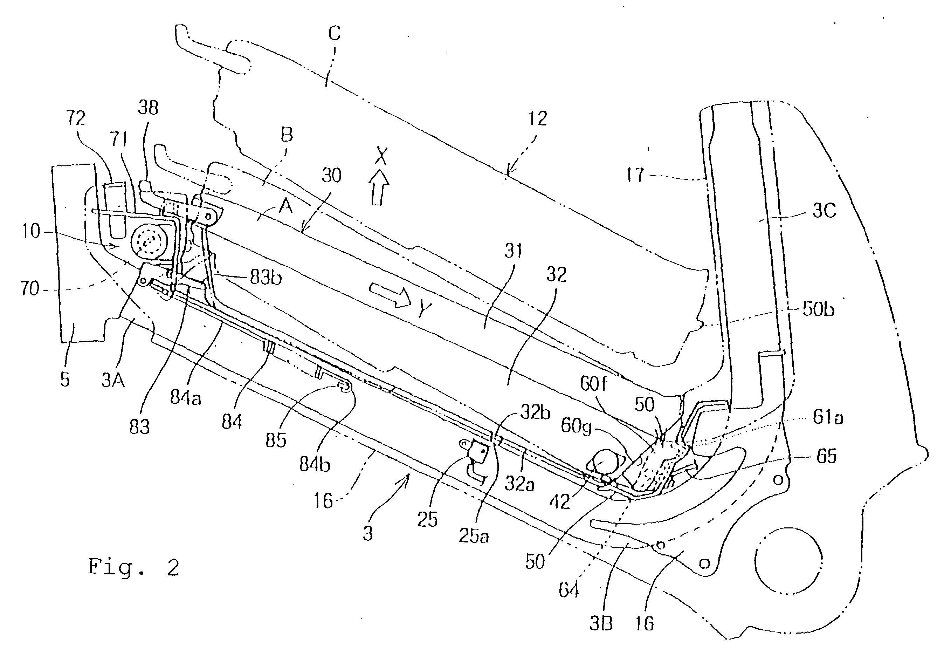

FIG. 2 is a side elevational view of the front frame portion.

This figure shows a condition wherein the body cover 16 is removed.

As shown in FIG. 2, the front side fixing portion 10 is provided at a front end portion of the main frame 3A, and the motor side connector 60 is provided in the proximity of the intermediate portion 3B.

The battery case assembly 30 can assume, in a condition wherein a rear end portion thereof is fitted with the motor side connector 60, a mounted position indicated by a solid line A wherein the front end portion is locked by the locking apparatus 70 and a popped up position indicated by a phantom line B wherein the locking apparatus 70 is put in an unlocking condition and the front end portion of the battery case assembly 30 is lifted.

Another phantom line C indicates a condition wherein the battery case assembly 30 is removed in a direction substantially perpendicular to the lengthwise direction of the main frame 3A (or a condition before the battery case assembly 30 is mounted).

By lowering the battery case assembly 30 in the direction indicated by an arrow mark X from the condition indicated by the phantom line C and pushing down the battery case assembly 30 while slidably moving the same in the direction indicated by an arrow mark Y from the position indicated by the phantom line B, the battery case assembly 30 can be mounted, and the battery case assembly 30 can be removed by a procedure reverse to the procedure.

A limit switch 25 is mounted on an inner side face of the body cover 16, and when the battery case assembly 30 is mounted on the body cover 16, a projection 32b formed on a bottom portion 32a of a lower case 32 of the battery case assembly 30 pushes an actuator 25a to turn on the limit switch 25.

FIG. 3 is a side elevational view, partly broken, of the battery case assembly.

The battery case assembly 30 has a two divided structure including an upper case 31 and the lower case 32 made of a plastic material, and stepped portions which mate with each other are provided at mating portions of the upper case 31 and lower case 32 to form a labyrinth structure to prevent invasion of water or the like. Side portions of the front sides of the upper and lower cases 31 and 32 are engaged with each other by engaging pawls 32c extending upwardly from the lower case 32, and on the rear side of the battery case assembly 30, the upper and lower cases 31 and 32 are fastened to each other using tapping screws 33 to removably integrate the upper and lower cases 31 and 32.

A rubber cushion member 34 is provided on the bottom portion 32a of the lower case 32, and when the battery case assembly 30 is mounted, the bottom portion of the battery case assembly 30 is contacted with the main frame 3A side with the rubber cushion member 34 interposed therebetween.

A battery pack 35 is accommodated in the battery case assembly 30.

A rib 31a is formed on an inner face of the upper case 31 such that it extends downwardly, and a groove rubber member 36 is attached to the rib 31a.

A plate-like rubber cushion 37 is disposed on an inner face of the bottom portion of the lower case 32.

The battery pack 35 is supported in a vibration proof condition with an upper portion thereof contacted with the groove rubber member 36 and with a lower portion thereof contacted with the plate-like rubber cushion 37.

A handle 38 is mounted for pivotal motion at a front end portion of the battery case assembly 30, and the oblique stepped portions 30a are formed on the side faces of the front end portion of the battery case assembly 30.

The shape of the stepped portions 30a coincides with the slant face wall 16a formed at the front end portion of the body cover 16 which covers over the front side fixing portion 10 shown in FIGS. 1 and 2.

A lower portion of a front face 30b at the front end portion of the battery case assembly 30 forms a pressing stepped portion 30c in the form of a recess which bites in rearwardly.

A rear slant face 30d which extends rearwardly obliquely upwards is formed on a side face of a rear end portion of the battery case assembly 30.

The shape of the rear slant face 30d coincides with the slant face wall 16b formed on the body cover 16 shown in FIGS. 1 and 2.

A rear end face 30e of the upper case 31 is inclined reversely to the rear slant face 30d.

A battery side connector (female connector) 50 is mounted at a rear end portion of the battery case assembly 30 using a screw 39 or the like.

A rear face 50a of the battery side connector 50 serves as a contact face for the motor side connector 60, and a positioning engaging projection 51 of a triangular shape as viewed in side elevation is provided at a central portion of the rear face 50a.

A rear end portion of a bottom portion of the battery side connector 50 serves as a guide slant face 50b which is inclined rearwardly upwards.

The battery pack 35 includes a large number of unit cells 35a arranged in two upper and lower stages and electrically connected in series, and a 35b in which the unit cells 35a are accommodated to form a pack.

For each of the unit cells 35a, a chargeable cell such as, for example, a nickel-cadmium cell is used.

Adjacent ones of the unit cells 35a are electrically connected in series using a conductive plate 35c.

The electric output of the battery pack 35 is connected to a discharging terminal of the battery side connector 50 via a fuse 40.

Reference character 41 denotes a thermistor for temperature detection, and 41a a lead to the thermistor 41.

Reference numeral 42 denotes a charging terminal, and this charging terminal 42 is provided on a side face of a rear portion of the lower case 32.

The charging terminal 42 has a built-in diode for prevention of reverse current.

Since the charging terminal 42 is provided independently of the discharging terminal (battery side connector), whether the battery case assembly 30 is mounted on the electric power assisted bicycle 1 or not, it is possible to charge the battery case assembly 30.

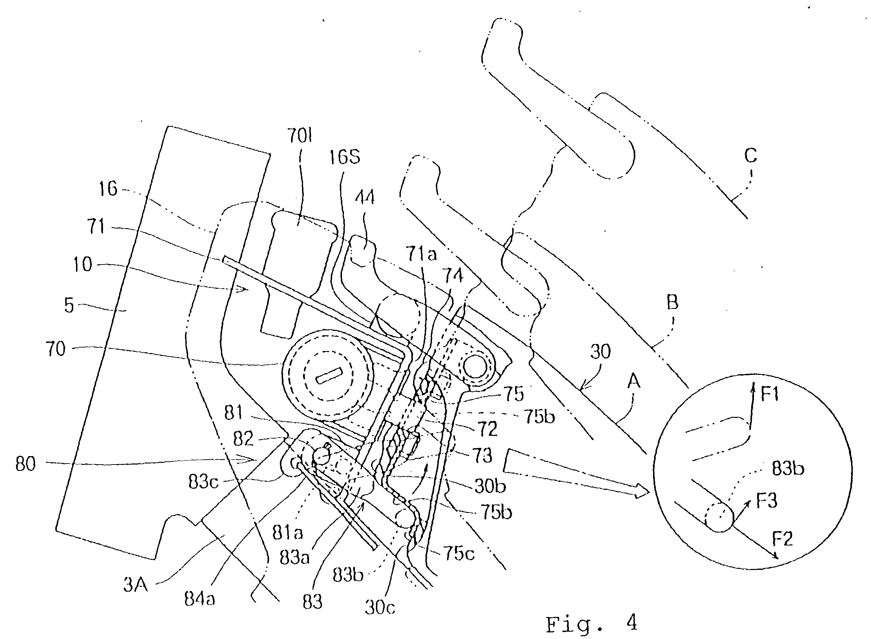

FIG. 4 is a side elevational view showing a detailed structure of the front side fixing portion of the battery case assembly.

The front side fixing portion 10 includes the locking apparatus 70 and a pop up mechanism 80, and the locking apparatus 70 is mounted on an upright wall portion 71a, which extends in an upward and downward direction, of a front bracket 71 which is provided between the head tube 5 and a front end portion of the main frame 3A and has an L-shaped bent cross section.

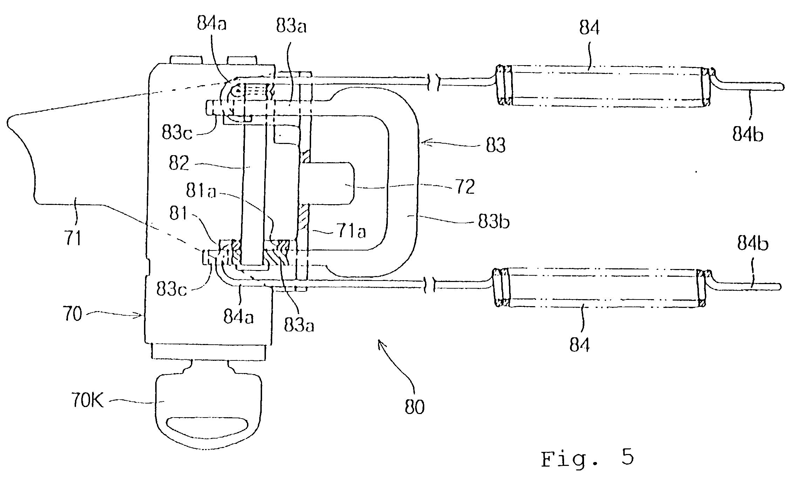

The locking apparatus 70 is in the form of a combination switch having a main switch function which turns on and off a power supply in response to a turning operation of a key 70K (refer to FIG. 5) inserted in a keyhole and another function of inserting and removing a lock pin 72 into and from a lock hole 73 formed in the front face 30b at a front end portion of the battery case assembly 30 to lock or unlock the battery case assembly 30.

If the key 70K is operated to its on position and power can be supplied from the battery pack 35 to the motor 18, then the lock pin 72 renders the battery case assembly 30 into a locked condition.

In the locked condition, the battery case assembly 30 cannot be removed.

Further, in the locked condition (with the key positioned at the on position), the key 70K cannot be removed.

When the key 70K is in its off position, supply of power is stopped, and although the key 70K can be removed when the key 70K is positioned in its off position, the lock pin 72 remains in its locking condition.

If the key 70K is turned from its off position to its locking position while it is pushed in, the lock pin 72 is released to allow removal of the battery case assembly 30.

A lock plate 75 is mounted on the front face 30b at a front end portion of the battery case assembly 30 by means of a screw 74 to reinforce the front face 30b.

The lock plate 75 has an opening 75a formed therein in register with the lock hole 73.

Further, a lower end portion of the lock plate 75 extends to the pressing stepped portion 30c to present a stepped portion exposed to the outside, and thus provides an unlocking pressing face 75b and a locking pressing face 75c in the forward and backward direction.

The pop up mechanism 80 includes a stay 81 provided on the lower upright wall portion 71a of the locking apparatus 70, a rockable arm 83 adjacent the stay 81 and supported by means of a slide shaft 82, and a tension spring 84 (refer to FIGS. 2 and 5) for biasing the rockable arm 83 to be pivoted in the counterclockwise direction.

FIG. 5 is a plan view showing a detailed structure of the front side fixing portion of the battery case.

The stay 81 is provided by a pair such that they extend forwardly with a distance left therebetween in its bicycle widthwise direction, and each of them has an elongated hole 81a formed therein such that it extends in the forward and backward direction so as to allow movement of the slide shaft 82 in the forward and backward directions therein.

Meanwhile, the rockable arm 83 has a substantially channel-shaped configuration as viewed in plan, and a pair of left and right flat portions 83a of the rockable arm 83 are placed on the outer sides of the stays 81.

The slide shaft 82 extends through the elongated holes 81a of the stays 81 between the left and right flat portions 83a of the rockable arm 83 and connects the rockable arm 83 to the stays 81 for movement in the forward and backward directions and for rocking motion around the slide shaft 82.

A portion of the rockable arm 83 which extends in the bicycle widthwise direction and interconnects the left and right flat portions 83a makes a pressing portion 83b.

This pressing portion 83b can be pressed against the unlocking pressing face 75b and the locking pressing face 75c of the lock plate 75 as shown in FIG. 4.

As shown in FIGS. 2 and 5, the tension spring 84 is formed from a pair of coil springs provided on the left and right side faces of the main frame 3A along the lengthwise direction.

As shown in FIG. 5, a downwardly projecting mounting projection 83c is formed at a front end portion of each of the flat portions 83a of the rockable arm 83, and front side mounting portions 84a of the tension springs 84 are anchored at the mounting projections 83c.

Rear side mounting portions 84b of the tension springs 84 are anchored at projections 85 projecting from the side faces of the main frame 3A as shown in FIG. 2.

The tension springs 84 normally bias the rockable arm 83 so as to pull it rearwardly and biases the pressing portion 83b to turn in the counterclockwise direction.

Accordingly, when a popped up position indicated by a phantom line B in FIG. 4 is assumed, the rockable arm 83 is pulled rearwardly and the slide shaft 82 is moved to rear end portions of the elongated holes 81a and the pressing portion 83b presses the unlocking pressing face 75b to raise it upwardly, and consequently, the tensile forces of the tension springs 84 almost act as a pushing up force F1.

On the other hand, in the mounted condition of the battery case assembly 30 indicated by a solid line A, since the unlocking pressing face 75b pushes down the pressing portion 83b in the clockwise direction, the rockable arm 83 assumes a substantially parallel position to the lengthwise direction of the main frame 3A, and the pressing portion 83b is pressed forwardly against the rockable arm 83 by the locking pressing face 75c and the slide shaft 82 is moved to front end portions of the elongated holes 81a.

Consequently, the reactive force of the tension springs 84 serves as a force of the pressing portion 83b pressing the unlocking pressing face 75b and the locking pressing face 75c.

The force F2 of the pressing portion 83b pressing the locking pressing face 75c rearwardly becomes remarkably greater than the force F3 to push up the unlocking pressing face 75b.

The pushing up force F3 has a magnitude sufficient to pop up a front portion of the battery case assembly 30 when the locking apparatus 70 is put into an unlocking condition.

Further, in the popped up position, the slide shaft 82 moves to rear end portions of the elongated holes 81a of the stays 81 and the pressing portion 83b is turned in the counterclockwise direction to push up the unlocking pressing face 75b contacted therewith.

Reference character 70I in FIGS. 2 and 4 denote an indicator, which indicates the on position of the locking apparatus 70.

Reference character 16S in FIG. 4 denotes a mounting stay of the body cover 16, and the mounting stay 16S is provided at an upper portion of the front bracket 71.

Subsequently, the structure of the motor side connector will be described.

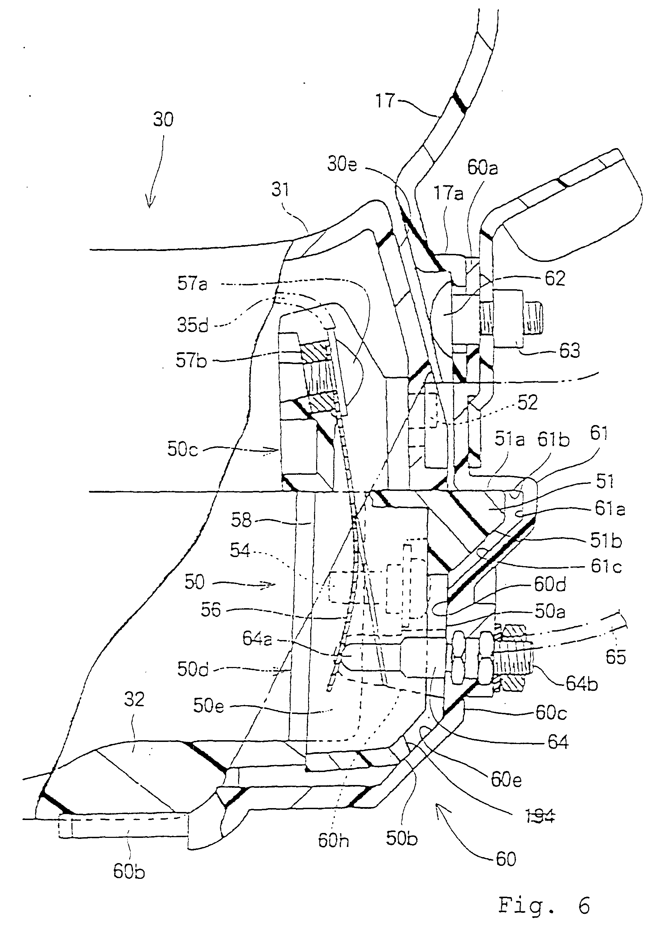

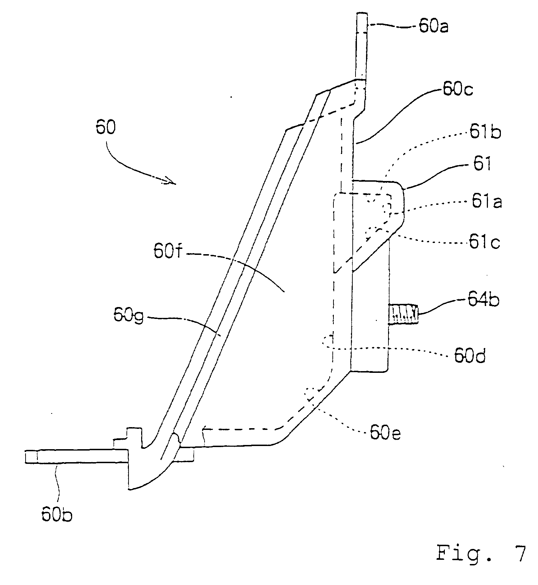

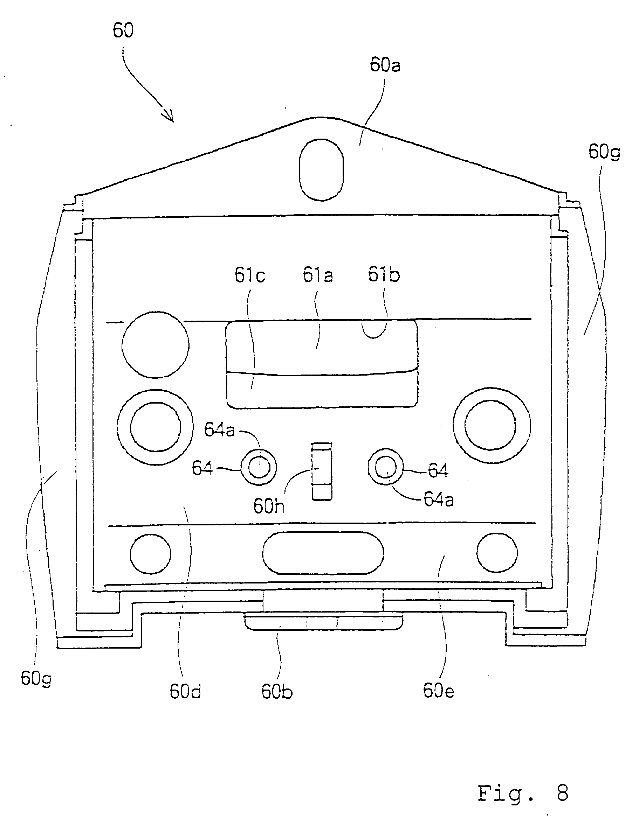

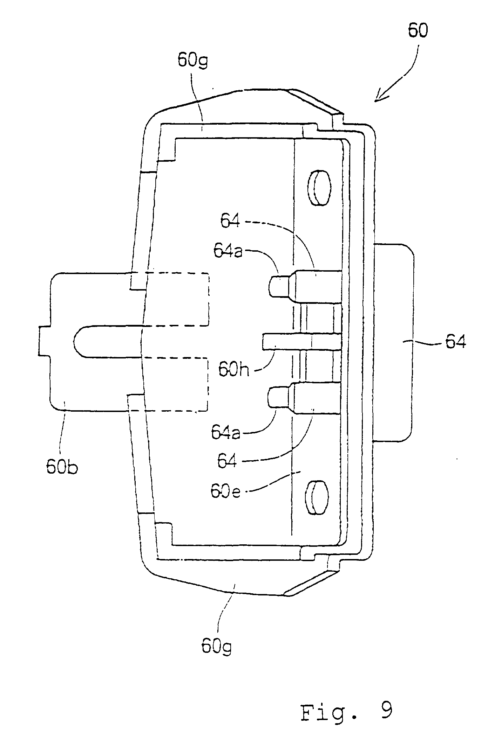

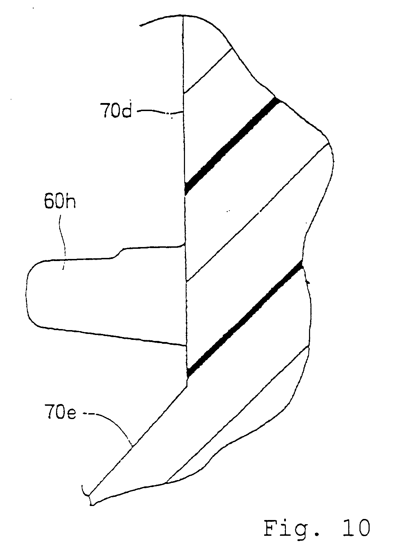

FIG. 6 is a side elevational sectional view showing a rear portion mounting structure of the battery case assembly, FIG. 7 is a side elevational view of the motor side connector, FIG. 8 is a front elevational view of the motor side connector, FIG. 9 is a plan view of the motor side connector, and FIG. 10 is an enlarged view of a positioning projection.

As shown in FIG. 2, the motor side connector 60 is provided in the proximity of the intermediate portion 3B of the front frame 3.

As shown in FIGS. 7 and 8, the motor side connector 60 includes an upper side mounting portion 60a and a lower side mounting portion 60b.

A contacting face 60d and a guide slant face 60e are formed on the inner side of a rear face 60c of the motor side connector 60.

A projection 61 having an engaging recess 61a formed on the inner side thereof is formed to extend rearwardly from the rear face 60c of the motor side connector 60.

As shown in FIG. 6, the upper side mounting portion 60a of the motor side connector 60 is position in an overlapping relationship on a lower end portion front face central portion 17a of the front face panel 17, which closes up the opening of the forward portion of the seat frame 3C not shown, and is attached by means of a screw 62 and a nut 63.

It is to be noted that the slope of the lower end portion front face central portion 17a and the slope of the rear face 30e of the upper case 31 of the battery case assembly 30 coincide with each other when the assisting power apparatus 12 is mounted.

When the battery side connector 50 and the motor side connector 60 are fitted with and connected to each other by mounting of the battery case assembly 30, the rear face of the battery side connector 50 is contacted with the contacting face 60d of the motor side connector 60 to position the battery case assembly 30 in the lengthwise direction.

The guide slant face 60e of the motor side connector 60 is formed with an inclined face substantially equal to the guide slant face 50b at a position corresponding to the guide slant face 50b of the battery side connector 50, and guides (guides) the battery case assembly 30 upon mounting and removal of the battery case assembly 30.

The projection 61 and the engaging recess 61a of the motor side connector 60 are provided at positions corresponding to the engaging projection 51 of the battery side connector 50.

The engaging recess 61a is formed a little larger than the engaging projection 51, and upon mounting of the battery case assembly 30, a top portion 51a of the engaging projection 51 is contacted with a top face 61b in the engaging recess 61a to position the battery case assembly 30 in the upward and downward direction.

A lower side inclined face 61c of the engaging recess 61a and a lower side inclined face 51b of the engaging projection 51 are inclined with substantially equal slopes, but a some gap is formed between the two inclined faces 61c and 51b.

As shown in FIG. 8, the motor side connector 60 has a pair of left and right motor terminals 64.

As shown in FIG. 6, each of the motor terminals 64 is in the form of a pin and an end portion 64a thereof projects inwardly of the battery case assembly 30.

A rear end portion 64b of each of the motor terminals 64 extends outwardly farther than the rear face 60c of the motor side connector 60 so that a cable 65 can be connected to it.

The cables 65 are connected to the control unit 100.

As shown in FIGS. 7 and 8, a pair of side wall portions 60f for fitting with the battery side connector 50 are formed on the left and right of the motor side connector 60, and front edge portions 60g of the side wall portions 60f are contacted with the rear slant face 30d of the battery case assembly 30.

As shown in FIG. 8, a positioning projection 60h is formed integrally with the contacting face 60d at an intermediate portion between the pair of left and right motor terminals 64.

As shown in FIG. 9, an end of the positioning projection 60h extends forwardly long farther than the end portions 64a of the motor terminals 64.

Subsequently, the structure of the battery side connector will be described.

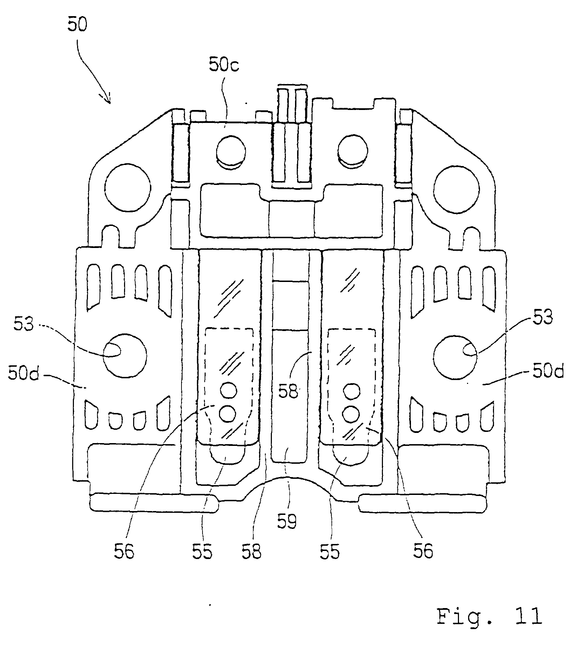

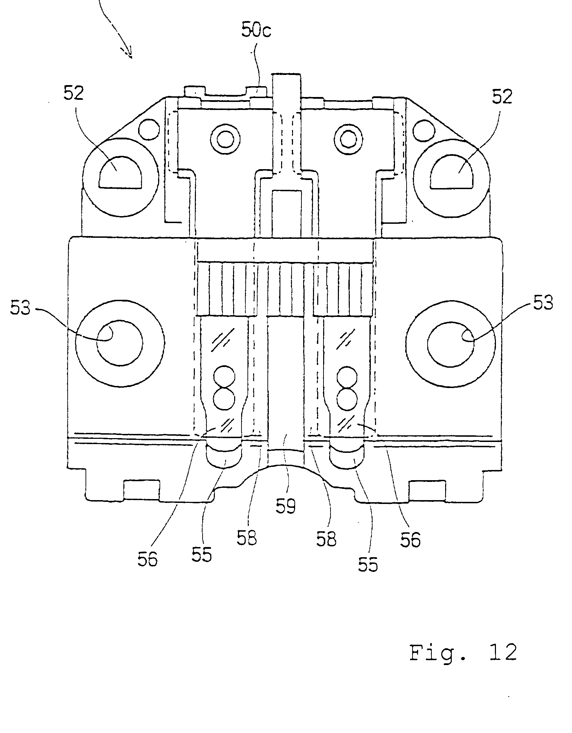

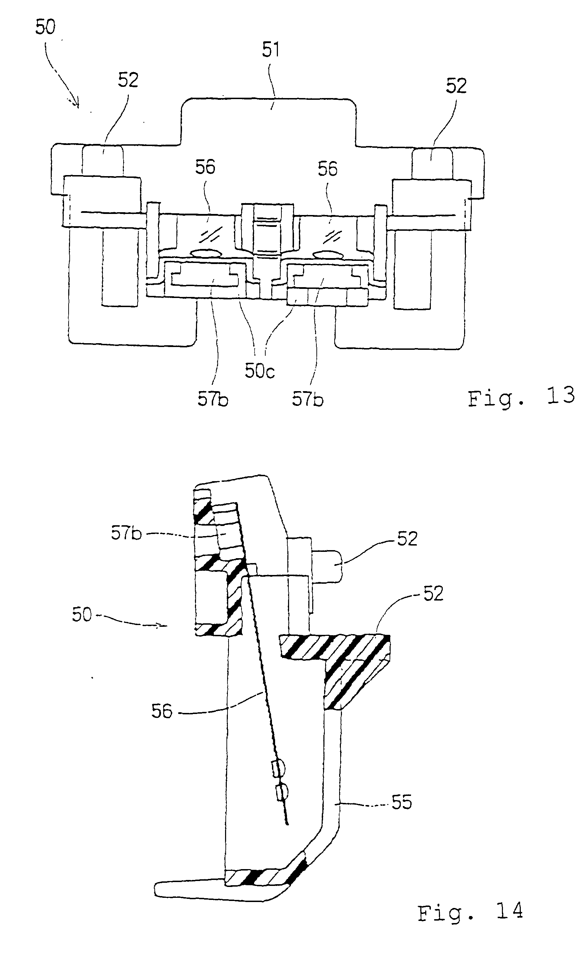

FIG. 11 is a front elevational view of the battery side connector, FIG. 12 is a rear elevational view of the battery side connector, FIG. 13 is a plan view of the battery side connector, and FIG. 14 is a side elevational sectional view of the battery side connector.

As shown in FIG. 6, an upper portion 50c of the battery side connector 50 is positioned on the inside of the upper case 31.

A positioning projection 52 for fitting with the rear end face 30e of the upper case 31 is provided on the rear face of the upper portion 50c of the battery side connector 50.

The positioning projection 52 is provided by one pair on the left and right as shown in FIG. 12.

As shown in FIG. 6, a lower portion 50d of the battery side connector 50 is attached by screws 54 indicated by dotted lines in FIG. 6 through a pair of left and right screw receiving holes 53 shown in FIGS. 11 and 12 from the outside of a rear end face of the lower case 32.

In a condition wherein the battery side connector 50 is mounted in the battery case assembly 30, the engaging projection 51 of the battery side connector 50 projects outwardly from the rear end of the battery case assembly 30.

A pair of terminal passing holes 55 are formed at positions of the motor side connector 60 corresponding to the motor terminals 64 on the lower side of the engaging projection 51.

The terminal passing holes 55 are communicated with a recess 50e formed in the battery side connector 50.

In a condition wherein the battery case assembly 30 is mounted, the motor terminals 64 extend into the recess 50e through the terminal passing holes 55.

A pair of discharging terminals 56 each in the form of a leaf spring are disposed in a vertical direction in the recess 50e.

An upper end portion of each of the discharging terminals 56 is fastened together with a power supply lead 35d from the battery pack 35 using a screw 57a.

While, in FIGS. 6, 13 and 14, the structure wherein a nut 57b is inserted in and fixed to the upper portion 50c of the battery side connector 50 in advance is shown, instead of the nut 57b, an increased thickness portion having a prepared hole for a thread may be provided so that the upper end portion of each of the discharging terminals 56 and the power supply lead 35d may be fastened together to the increased thickness portion using a tapping screw or the like.

As shown in FIG. 6, free ends of lower end portions of the discharging terminals 56 are adapted to cover over exit portions of the terminal passing holes 55 opposed to the recess 50e as indicated by a phantom line, and in a mounted condition of the battery case assembly 30, the discharging terminals 56 are contacted by the end portions 64a of the motor terminals 64 so that they are resiliently deformed as indicated by a solid line, thereby to obtain a high contacting force.

As shown in FIGS. 11 and 12, a pair of ribs 58 which are spaced away from each other by a predetermined distance and extend in parallel to each other in the upward and downward direction are formed between the left and right terminal passing holes 55, and an elongated hole 59 elongated in the upward and downward direction is formed at a portion positioned between the ribs 58.

When the battery side connector 50 is connected to the motor side connector 60, the positioning projection 60h of the motor side connector 60 is inserted into the elongated hole.

In any of the mounted position (solid line A) and the popped up position (phantom line B) of the battery case assembly 30 shown in FIG. 2, the end portions 64a of the motor terminals 64 are fitted in the terminal passing holes 55 and contacted with the discharging terminals 56 to establish electric connection.

Thus, in the popped up position, the limit switch 25 is turned off to cut the electric connection, but in the mounted condition of the battery case assembly 30, the limit switch 25 is turned on to establish electric connection.

Coupling and decoupling of the motor side connector 60 and a rear portion of the battery case assembly 30 are performed such that the battery case assembly is slidably moved in the direction indicated by an arrow mark Y in FIG. 2 so that the motor terminals 64 are inserted into or removed from the discharging terminals 56 of the battery side connector 50 while the engaging projection 51 of the battery side connector 50 is simultaneously inserted into or removed from the engaging recess 61a of the motor side connector 60.

In this instance, the stroke amount of the battery case assembly 30 in the direction of the arrow mark Y is provided by a stroke of the slide shaft 82 of the pop up mechanism 80.

In the mounted position indicated by the solid line A in FIG. 2, the battery side connector 50 provided at a rear end portion of the battery case assembly 30 is fitted with the motor side connector 60 and fixed in a directly contacting condition.

By the fitting and direct contacting of the two connectors 50 and 60, the battery side connector 50 is positioned accurately in all of the three directions of the forward and backward direction, the leftward and rightward direction and the upward and downward direction.

Accordingly, the contact coupling between the discharging terminals 56 and the motor terminals 64 can be performed accurately without being influenced by the dimensional error of the battery case assembly 30.

Since the play is reduced, also the contact abrasion is reduced.

In addition to the positioning by the fitting direct contact of the two connectors 50 and 60, the engaging projection 51 of the battery side connector 50 is fitted into the engaging recess 61a of the motor side connector 60 to position the battery case assembly 30 in the upward and downward direction.

The rear end of the battery case assembly 30 is fitted into the inside of the left and right side wall portions 60f of the motor side connector 60 to position the motor side connector 60 in the leftward and rightward direction.

As a result, connection between the terminals 56 and 64 can be established with further certainty.

Further, since the battery case assembly 30 is urged rearwardly by the tension springs 84 via the rockable arm 83 of the pop up mechanism 80, a force urging in the coupling direction of the discharging terminals 56 and the motor terminals 64 acts, and consequently, the contact pressure between the lower side free ends of the discharging terminals 56 and the end portions 64a of the motor terminals 64 can be raised.

Also by the high contact pressure, a contact pressure variation such as chattering between the two terminals 56 and 64 which is caused by vibrations of the bicycle body can be prevented to prevent contact abrasion thereby to increase the life of the terminals.

Since the free end of each of the discharging terminals 56 is in the form of a leaf spring and the end portion 64a of each of the motor terminals 64 contacts with the free end of the discharging terminal 56 while resiliently deforming the same, this is effective to raise the contact pressure. Further, also since the battery case assembly 30 is inclined forwardly obliquely upwards, an increase of the contact pressure by the weight of the battery case assembly 30 itself can be anticipated.

When it is tried to remove the battery case assembly 30, the locking apparatus 70 is put into an unlocking position by means of the key 70K. Thereupon, the slide shaft 82 is slidably moved rearwardly and pulled by the spring force of the tension spring 84 until it reaches rear end portions of the elongated holes 81a, and simultaneously, the rockable arm 83 is rocked in the counterclockwise direction to the popped up position in which the it pushes up a front portion of the battery case assembly 30 as indicated by phantom lines in FIGS. 2 and 4. Consequently, if the battery case assembly 30 is pulled in a direction (direction indicated by the arrow mark X in FIG. 2) perpendicular to the lengthwise direction of the main frame 3A by means of the handle 38, then the battery case assembly 30 can be removed readily as indicated by the phantom line C.

In order to mount the battery case assembly 30, the battery case assembly 30 is held substantially in parallel to the main frame 3A above the main frame 3A as indicated by the phantom line C in FIG. 2, and then moved downwardly (in the direction of the arrow mark X), whereafter it is slidably moved rearwardly in a direction (direction of the arrow mark Y) substantially parallel to the lengthwise direction of the main frame 3A until the battery side connector 50 is fitted with the motor side connector 60.

Consequently, the engaging projection 51 is fitted into the engaging recess 61a and simultaneously the motor terminals 64 are inserted into the battery side connector 50 until the end portions 64a thereof are brought into contact with the discharging terminals 56.

Those movements are performed smoothly with certainty by the positioning action of the motor side connector 60.

At this point of time, the end portions 64a of the motor terminals 64 and the discharging terminals 56 exhibit a contacting condition with each other, but since the limit switch 25 is off, electric connection is cut, thereby to improve the durability of the terminals.

In this instance, the rockable arm 83 is at a position indicated by a phantom line, and as shown in FIG. 4, the unlocking pressing face 75b of a front portion of the battery case assembly 30 contacts with the pressing portion 83b of the rockable arm 83. However, since the pushing up force of the tension springs 84 acting upon the pressing portion 83b supports the weight of the battery case assembly 30, the battery case assembly 30 assumes the popped up position in which the front side thereof is inclined a little upwardly as indicated by the phantom line B.

Any condition wherein locking by the locking apparatus 70 is not effective like the popped up position is a condition wherein setting (mounting) of the battery case assembly 30 is insufficient, and if the bicycle runs in this condition, then a drop of the battery case assembly 30 or disconnection between the discharging terminals 56 and the motor terminals 64 may occur. However, in such a condition, since the popped up position is exhibited without fail, this can be visually observed immediately.

If a front end portion of the battery case assembly 30 is pushed down subsequently, then since the locking pressing face 75c pushes down the pressing portion 83b of the rockable arm 83 in the clockwise direction, the rockable arm 83 is pushed in and slidably moved forwardly until the slide shaft 82 moves in the elongated holes 81a and comes to front end portions of the elongated holes 81a against the spring force of the tension springs 84, thereby entering a condition indicated by a solid line.

If the key 70K is manually operated to put the locking apparatus 70 into a locking condition, the component of force to urge the pressing portion 83b rearwardly increases to press the battery case assembly 30 rearwardly.

Consequently, the battery side connector 50 is pushed further strongly into the motor side connector 60 so that it is secured with certainty.

In this instance, since the guide slant face 50b of the battery side connector 50 is guided by the guide slant face 60e in the motor side connector 60, the top portion 51a of the engaging projection 51 is contacted with the top face 61b of the engaging recess 61a to position the battery side connector 50 in the upward and downward direction.

Consequently, the end portions 64a of the motor terminals 64 advance further deeply into the recess 50e of the battery side connector 50 and resiliently deform the discharging terminals 56 forwardly by a greater amount, thereby realizing stabilized contact between the contacts.

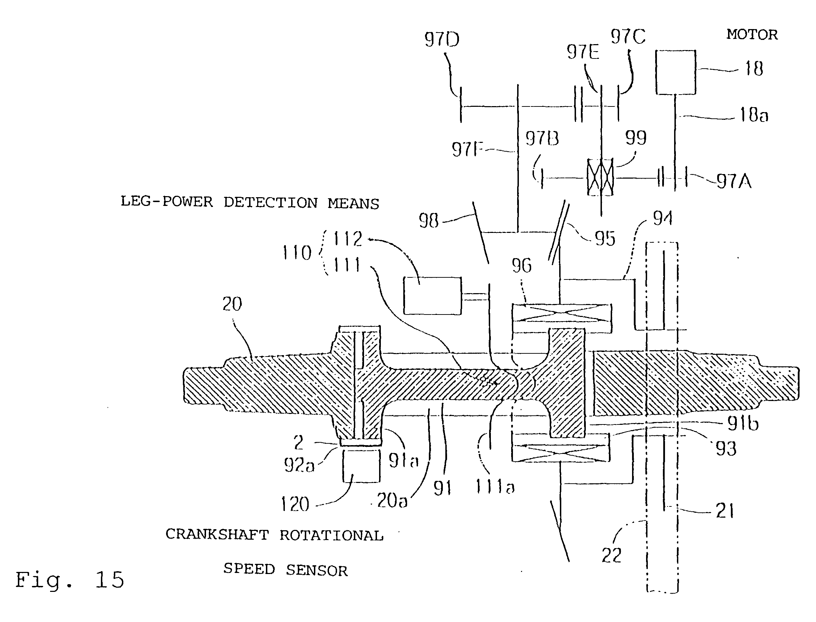

FIG. 15 is a schematic structural view of the transmission and the leg-power detection means.

A through-hole 20a is formed at an intermediate portion of the crankshaft 20 in its axial direction such that it extends through the crankshaft 20 in a diametrical direction and extends in the axial direction.

A torsion bar 91 which is accommodated in the inside of the through-hole 20a coaxially with the crankshaft 20 has a head portion 91a formed at the left end (input end) thereof and coupled to the crankshaft 20 via a collar 92 and has another head portion 91b formed at the right end (output end) thereof and coupled by force fitting in a recessed groove formed on an inner periphery of an annular driving member 93.

The opposing wall faces of the through-hole 20a of the crankshaft 20 are curved substantially arcuately so as to allow relative rotation by a predetermined angle with respect to the head portion 91b on the free end side of the torsion bar 91 and prevent breakage of the torsion bar 91 when an excess load is applied.

A first one-way clutch 96 is provided between a bevel gear 95 securely mounted on the inner periphery of a sleeve 94 and the annular driving member 93.

If the pedals 23 not shown are treadled to rotate the crankshaft 20 forwardly, then the torque of the crankshaft 20 is transmitted via the torsion bar 91, the driving member 93, the bevel gear 95 and the sleeve 94 to the driving sprocket wheel 21 spline coupled to the outer periphery of the sleeve 94, and then transmitted to the rear wheel 2R via the chain 22 and the driven sprocket wheel 13 shown in FIG. 1.

Further, if the pedals 23 not shown are treadled to rotate the crankshaft 20 reversely, then the first one-way clutch 96 slips to allow the reverse rotation of the crankshaft 20.

If the motor 18 is driven to rotate, then the torque of an output power shaft 18a of the motor 18 is transmitted to the driving sprocket wheel 21 via four spur gears 97A, 97B, 97C and 97D and the two bevel gears 98 and 95.

Further, in order that the rotation of the driving sprocket wheel 21 by human power may not be disturbed even in a condition wherein the motor 18 stops, a second one-way clutch 99 is provided on a first intermediate shaft 97E.

It is to be noted that reference character 97F denotes a second intermediate shaft.

Leg-power detection means 110 is formed from torque to displacement conversion means 111 for converting a torsion by the leg-power (torque) into a displacement in an axial direction, and a stroke sensor 112 for outputting an electric signal corresponding to the displacement.

The torque to displacement conversion means 111 is formed from a convex cam face formed on an end face of a slider inner member llla which rotates integrally with the crankshaft 20 and a concave cam face formed on an end face of the driving member 93 and engaged with the convex cam face.

In order to detect the speed of rotation of the crankshaft 20, a toothed portion 92a is formed on the outer periphery of the collar 92 which couples the crankshaft 20 and the head portion 91a of the torsion bar 91 to each other, and a crankshaft rotation sensor 120 is disposed in an opposing relationship to the toothed portion 92a.

The crankshaft rotation sensor 120 is constructed so as to optically or magnetically detect the toothed portion 92a and output detection pulses.

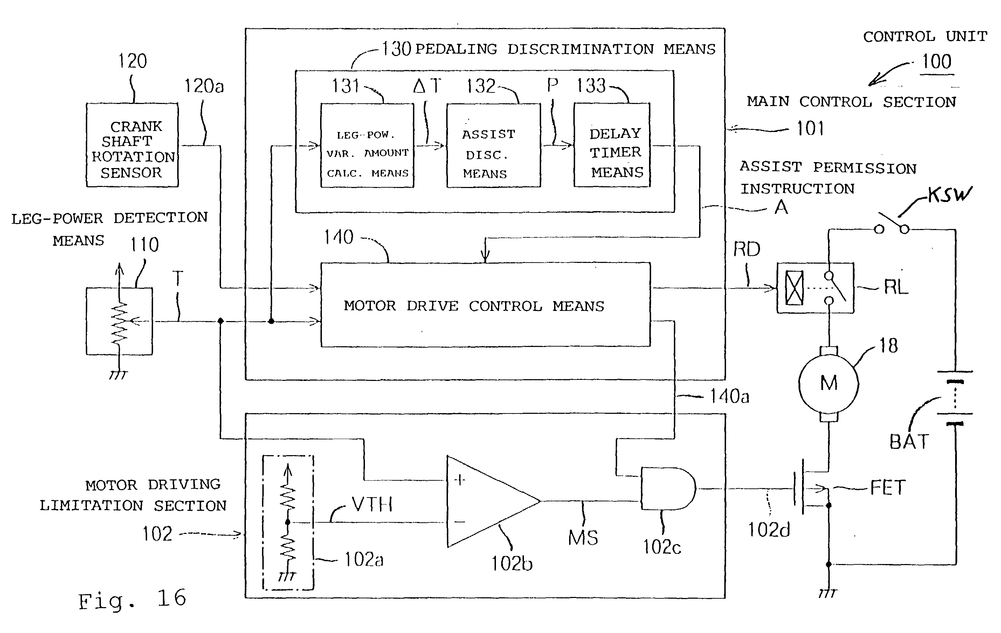

FIG. 16 is a functional block constructive view of the control unit according to claims 1 and 2.

The control unit 100 includes a main control section 101 constructed making use of a microcomputer system, a motor driving limitation section 102 constructed without using a microcomputer system, a relay RL for controlling power supply to the motor 18, and a field effect transistor FET for power forming a motor driver.

Reference character BAT denotes a battery power supply accommodated in the battery pack in the battery case assembly, and reference character KSW denotes a main switch (combination switch) which is operated by the key for the locking apparatus.

The main control section 101 includes pedaling discrimination means 130 and motor drive control means 140.

The pedaling discrimination means 130 discriminates based on a leg-power T detected by the leg-power detection means 110 whether or not the bicycle is being pedaled, and if it discriminates that the bicycle is being dialed, then it outputs an assist permission instruction A. The pedaling discrimination means 130 includes leg-power variation amount calculation means 131, assist discrimination means 132 and delay timer means 133.

The leg-power variation amount calculation means 131 detects the leg-power (torque signal) T after each predetermined interval of time, compares the detected leg-power with the leg-power of the preceding detection to calculate a leg-power increment (leg-power increment per unit time) ΔT and outputs the leg-power increment ΔT.

The assist discrimination means 132 compares the leg-power increment ΔT with an assist permission threshold value ΔTth set in advance, and if the leg-power increment ΔT is equal to or higher than the assist permission threshold value ΔTth, then it discriminates that the bicycle is being pedaled and outputs a pedaling detection output P of, for example, the H level. When the leg-power increment ΔT is lower than the assist permission threshold value ΔTth, the assist discrimination means 132 outputs, for example, the L level.

The delay timer means 133 outputs an assist permission instruction A without reservation while the pedaling detection output P of, for example, the H level is supplied thereto, and, for a time until a delay time td set in advance elapses after a point of time at which supply of the pedaling detection output P is stopped, the delay timer means 133 keeps outputting of the assist permission instruction A, whereafter it stops the outputting of the assist permission instruction A.

The motor drive control means 140 outputs, if the assist permission instruction A is supplied thereto, a relay driving instruction RD to render the relay RL operative, and calculates the speed of rotation of the crankshaft based on the pulse period of a pulse signal 120a outputted from the crankshaft rotation sensor 120. Then, the motor drive control means 140 refers to a PWM map registered in advance (or makes use of a calculation equation prepared in advance) to find out an energization ratio (duty) per unit time of the motor 18 based on the speed of rotation of the crankshaft and the leg-power detected by the leg-power detection means 110 and produces and outputs a motor driving signal 140a PWM modulated in accordance with the thus found out energization ratio (duty).

The motor driving limitation section 102 includes a voltage comparator 102b which compares a threshold voltage VTH produced by threshold voltage generation means 102a and a voltage representative of the leg-power T detected by the leg-power detection means 110 with each other and outputs a motor operation permission/limitation instruction signal MS which has the H level when the voltage representative of the leg-power T is higher than the threshold voltage VTH but has the L level when the voltage is not higher than the threshold voltage VTH, and a logical AND circuit (AND gate) 102c. The PWM modulated motor driving signal 140a is supplied to one of a pair of input terminals of the logical AND circuit (AND gate) 102c while the motor operation permission/limitation instruction signal MS is supplied to the other input terminal, and the field effect transistor FET for power which constructs a motor driver is driven to switch in response to an output signal 102d of logical AND circuit (AND gate) 102c.

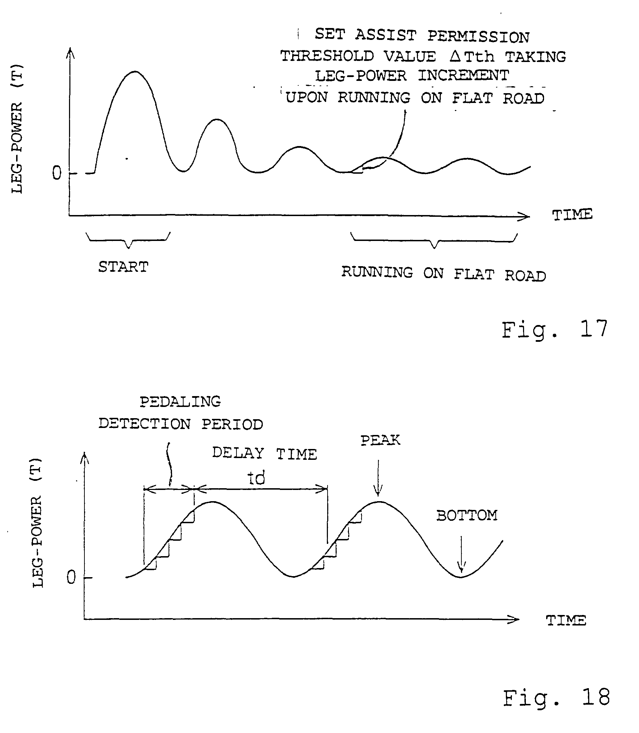

FIG. 17 is a time chart illustrating an example of a variation of the leg-power with respect to time.

Although high leg-power is required to start the bicycle from its stopping condition, in order to cause the bicycle to run on a flat road, low leg-power is required.

Therefore, the assist permission threshold value ΔTth for discrimination of whether or not the bicycle is being pedaled is set so as to allow assistance to be performed also in a condition wherein the bicycle is running at a low speed on a flat road.

It is to be noted that the assist permission threshold value ΔTth for detecting that the driver pedals the bicycle may be varied using an absolute value of the leg-power, the bicycle speed, the speed of rotation of the crankshaft or the like as a parameter.

Further, the assist permission threshold value A Tth may be set to a high value in a stopping condition of the bicycle whereas it is set to a low value after rotation of the crankshaft is detected.

Where the assist permission threshold value ΔTth has a hysteresis characteristic in this manner, no assistance occurs only by light pedaling of the bicycle in a stopping condition.

FIG. 18 is a time chart illustrating a relationship between the period of pedaling and the delay time.

The delay time td for the permission of assistance is set so that the assistance may be not be stopped within a time from a peak to a bottom of the leg-power T even in a condition wherein the bicycle is pedaled slowly.

The delay time td may be varied in response to the speed of rotation of the crankshaft. Where such construction is employed, assistance is performed with certainty even when the bicycle is pedaled very slowly.

Further, the delay time td may be varied using an absolute value of the leg-power, the bicycle speed or the like as a parameter.

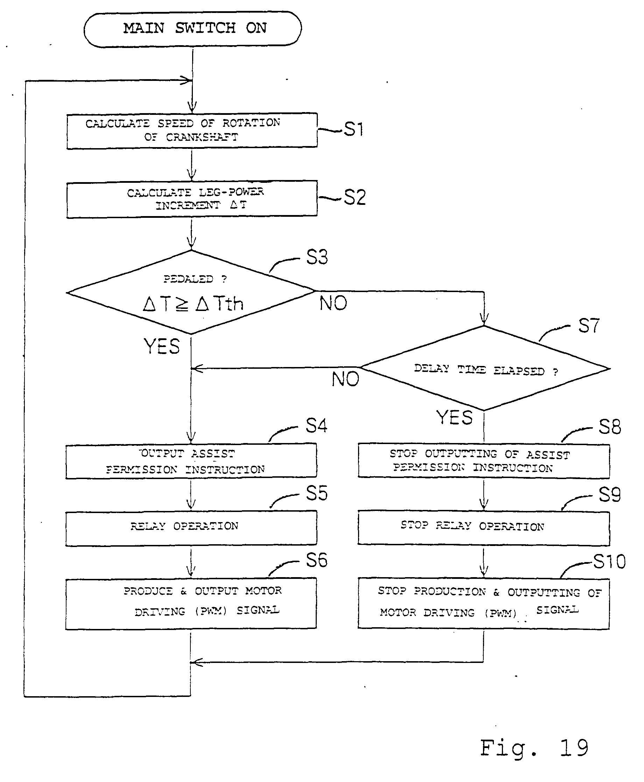

FIG. 19 is a flow chart illustrating operation of the main control section according to claims 1 and 2.

If the main switch is turned on, then the main control section 101 is put into an operative condition.

Calculation of the speed of rotation of the crankshaft is performed at step S1, and the increment ΔT of the leg-power per unit time is calculated at step S2.

It is discriminated at step S3 whether or not a pedaling operation is being performed.

When the increment ΔT of the leg-power T is equal to or higher than the assist permission threshold value Δ Tth, it is discriminated that the bicycle is being pedaled, and an assist permission instruction A is outputted at step S4. Then, the relay RL is rendered operative to allow supply of power to the motor 18 at step S5, and then, a PWM modulated motor driving signal 140a is produced and outputted at step S6.

When it is discriminated at step S3 that the bicycle is not being pedaled (the increment ΔT of the leg-power T is lower than the assist permission threshold value ΔTth), it is monitored at step S7 whether or not the delay time td has elapsed, and at a point of time when the delay time td elapses, outputting of the assist permission instruction A is stopped (step S8) and the relay RL is released (step S9), whereafter outputting of the motor driving signal 140a is stopped (step S10).

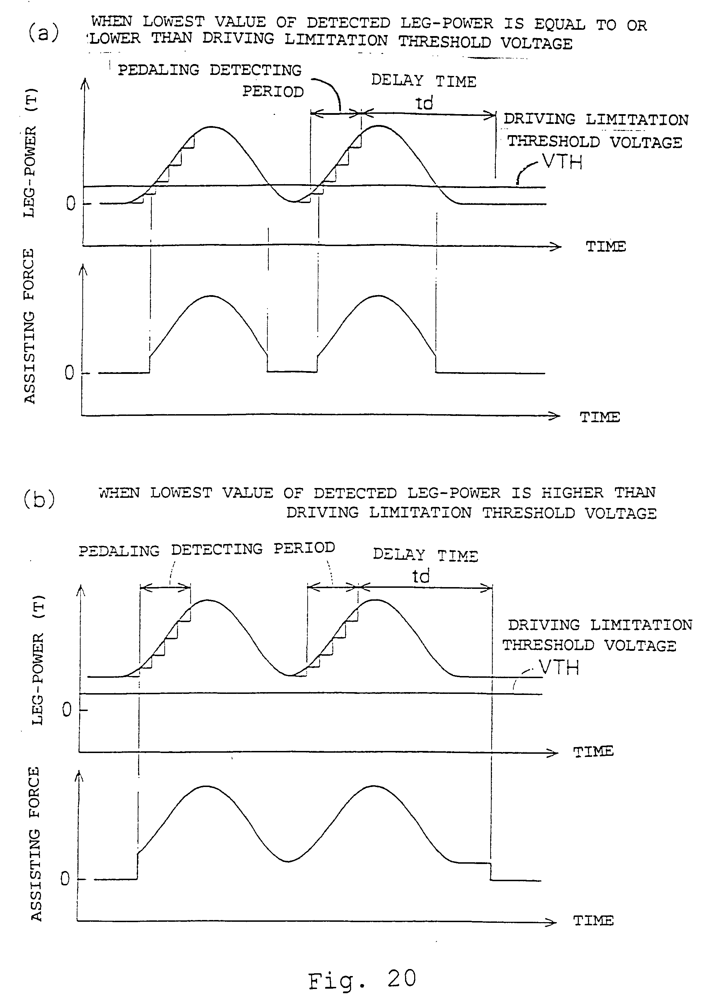

FIG. 20 is a time chart illustration a relationship between the leg-power and the assisting force.
(a) of FIG. 20 shows the relationship when the bottom of the leg-power (which corresponds to a condition wherein the bicycle is not pedaled) exhibits a value equal to or lower than a threshold voltage for limitation to driving of the motor while (b) of FIG. 20 shows the relationship when the bottom of the leg-power (which corresponds to a condition wherein the bicycle is not pedaled) exhibits a value higher than the threshold voltage for limitation to driving of the motor.

If the leg-power increment ΔT is equal to or higher than the assist permission threshold value ΔTth, then an assist permission instruction A is outputted so that the motor 18 is PWM operated to supply an assisting force corresponding to the leg-power T.

Even if the leg-power increment ΔT becomes lower than the assist permission threshold value ΔTth, since the assistance is continued within the delay time td, while the bicycle is continued to be pedaled, the assistance is continued except within a period within which the assistance is stopped by operation of the motor driving limitation section 102 (within a period wherein the voltage representative of the leg-power T is equal to or lower than the threshold voltage VTH).

Even if operation of the leg-power detection means 110 is not normal and the voltage representative of the leg-power T is higher than the threshold voltage VTH while pedaling is stopped, supply of the assisting force is stopped at a point of time when the delay time td elapses.

Accordingly, even when operation of the leg-power detection means 110 is not normal and the pedaling detection value T does not exhibit a value substantially equal to zero although the bicycle is not being pedaled, unnecessary supply of the assisting force is stopped simultaneously with stopping of outputting of the assist permission instruction A from the pedaling discrimination means 130.

While an example wherein a pedaling condition is discriminated based only on the increment of the leg-power T is described, the pedaling condition may be discriminated otherwise including also the degree of decrease of the leg-power T.

Where the pedaling condition is discriminated based on the degree of increase and the degree of decrease of the leg-power T, the delay time td may be set comparatively short so that assistance may be stopped rapidly after a point of time when pedaling is stopped.

While, in the flow chart shown in FIG. 19, the procedure is illustrated wherein calculation of the speed of rotation of the crankshaft is performed in prior so that the assist permission threshold value ΔTth and the delay time td may be variably set in response to the speed of rotation of the crankshaft, where the assist permission threshold value ΔTth and the delay time td are not set variable, the calculation of the speed of rotation of the crankshaft may be performed prior to production of a motor driving signal at step S6.

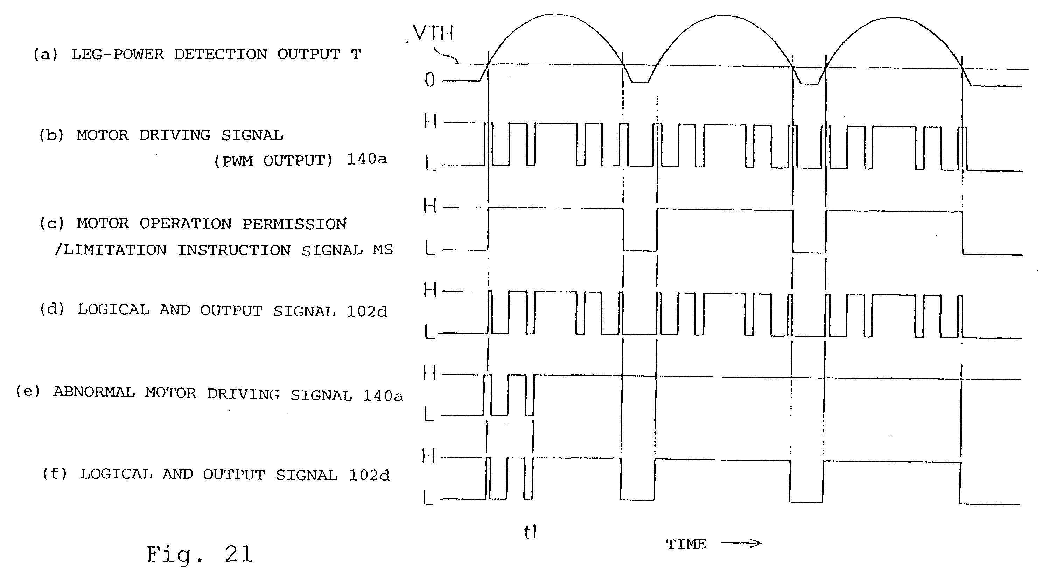

FIG. 21 is a time chart illustrating operation of the motor driving limitation section.

When the bicycle is pedaled, since no leg-power is applied at the top dead center and the bottom dead center of each pedal, the leg-power detection output T exhibits a voltage waveform wherein an increase and a decrease are repeated cyclically as shown in (a) of FIG. 21.

The voltage comparator 102b outputs a motor operation permission/limitation instruction signal MS of the H level as shown in (c) of FIG. 21 while the voltage of the leg-power detection output T is higher than the threshold voltage VTH.

Accordingly, even if the main control section 101 outputs a motor driving signal (PWM signal) 140a shown in (b) of FIG. 21 based on the leg-power detection output T, a logical AND output signal 102d shown in (d) of FIG. 21 is outputted from the logical AND circuit (AND gate) 102c, and actual operation of the motor 18 is controlled based on the logical AND output signal 102d. In other words, only while the leg-power exceeds its threshold value, operation of the motor 18 is permitted, and assisting force is supplied only within the period.

Even if normal operation of the main control section 101 is disturbed by some cause and, for example, the main control section 101 keeps the output of the H level after time tl as shown in (e) of FIG. 21, operation of the motor 18 is permitted only while the leg-power exceeds the threshold value as shown in (f) of FIG. 21.

Accordingly, if operation of the main control section 101 becomes abnormal, in a condition wherein the bicycle is not pedaled, no assisting power is supplied from the motor 18 at all.

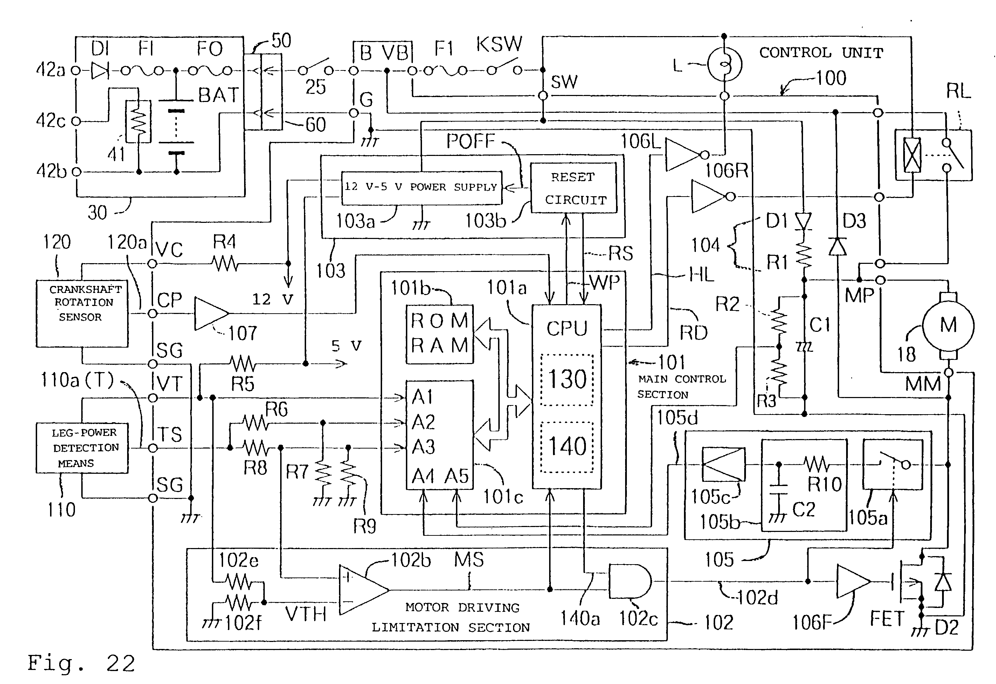

FIG. 22 is a circuit constructive view showing a concrete example of the control unit.

The battery power supply BAT in the battery case assembly 30 is supplied to power source terminals B and G of the control unit 100 via a power supply side fuse FO, the battery side connector 50, the motor side connector 60 and the limit switch 25.

It is to be noted that charging of the battery power supply BAT in the battery case assembly 30 is performed from a positive electrode side terminal 42a of the charging connector 42 via a diode DI and a charging side fuse FI.

The thermistor (heat sensitive resistance element) 41 for detecting the battery temperature upon charging is connected at one end side thereof to a negative electrode side terminal 42b and at the other end thereof to a signal terminal 42c.

If the main switch KSW is operated to an on state, then the battery power supply BAT is supplied from a positive electrode side power supply terminal VB of the control unit 100 to a power supply-reset circuit section 103 via a fuse F1, the main switch KSW and a terminal SW, and a capacitor C1 for motor power supply stabilization is charged via a pre-charging circuit 104 which includes a diode D1 and a charging current limitation resistor R1.

The power supply-reset circuit section 103 includes a 12 V-5 V power supply 103a for stepping down a battery power source of, for example, 24 V to output stabilized power supplies of 2 V and 5 V, and a reset circuit 103b which operates with the 5-V power supply.

The 12-V power supply is used for the crankshaft rotation sensor 120 and is used also as a gate control voltage for the field effect transistor FET for power which controls energization of the motor 18.

The 5-V power supply is used by the main control section 101 which is constructed making use of a one-chip microcomputer, the motor driving limitation section 102, a motor current detection circuit 105 and so forth.

The reset circuit 103b supplies, upon rising of the 5-V power supply, a reset pulse RS to a CPU 101a and monitors a watchdog pulse WP outputted in a predetermined cycle from the CPU 101a. When the watchdog pulse WP is not supplied to the reset circuit 103b for more than a predetermined time, the reset circuit 103b outputs a reset pulse RS to reset (initialize) the CPU 101a.

Further, if supply of the watchdog pulse WP is not resumed after the reset pulse RS is outputted, the reset circuit 103b supplies an interruption instruction POFF for the 12-V and 5-V power supplies to the 12 V-5 V power supply 103a to stop the 12-V and 5-V power supplies.

The main control section 101 is constructed using a one-chip microcomputer in which the CPU 101a, a ROM-RAM 101b, an analog to digital converter 101c, a timer not shown and so forth are built.

The voltage across the capacitor C1 for motor power supply stabilization is divided by a resistor R2 and another resistor R3 so that a resulting voltage may fall within an input allowed voltage range of the analog to digital converter 101c, and the divided voltage is supplied to an input terminal A5 of the analog to digital converter 130c.

The CPU 101a permits, after initialization processing based on a reset pulse RS, outputting of a relay driving instruction RD at a point of time when the divided voltage value after analog to digital conversion exceeds a preset voltage.

When a relay driving instruction RD is outputted, the exciting winding of the relay RL is energized via a relay driving circuit 106R, whereupon the contact of the relay RL is put into a closing condition so that the battery power supply BAT is applied to the motor 18.

Since the voltage across the capacitor C1 for motor power supply stabilization is monitored and the contact of the relay RL is driven to be closed after the capacitor C1 is charged up, no excessively high charging current will flow through the contact of the relay RL, and the contact will not be damaged.

It is to be noted that the construction may be modified such that, at a point of time when the rate of rise of the voltage across the capacitor C1 per unit time becomes equal to or lower than a predetermined value, it is discriminated that pre-charging of the capacitor C1 is completed and driving of the relay RL is permitted.

The discrimination based on the variation of the voltage across the capacitor C1 allows detection of completion of pre-charging irrespective of the voltage value of the battery power supply BAT.

When the field effect transistor FET for controlling energization of the motor 18 is short-circuited between the drain and the source, when a diode D2 for absorbing a reverse direction surge voltage connected in parallel between the drain and the source, or the like suffers from a short-circuit failure or the like, the voltage across the capacitor C1 is a voltage equal to the battery voltage divided by the charging current limitation resistor R1 and the resistance of the winding of the motor 18.

The resistance value of the charging current limitation resistor R1 is set sufficiently high comparing with the resistance value of the winding of the motor 18.

Accordingly, if such short-circuit failure as mentioned above occurs, since the voltage across the capacitor C1 does not exhibit a rise, driving of the relay RL is inhibited, and consequently, supply of excess current caused by a short-circuit failure is prevented.

Further, the CPU 101a monitors the voltage across the capacitor C1 also while the motor 18 is in an operating condition, and performs correction of the energization ratio of the motor driving signal (PWM signal) 140a based on an actual voltage value applied to the motor 18 so that desired assisting torque may be obtained.

Consequently, even when the battery power supply voltage drops or the like, desired assisting torque can be generated.

A surge voltage of the opposite polarity which is produced upon stopping of energization of the motor 18 is absorbed by the battery power supply BAT via a diode D3.

For the power supply side fuse FO in the battery case assembly 30, a fuse for high current (several tens ampere) is used.

Since supply of power to the motor 18 is performed via the contact of the relay RL and to various electric equipments such as, for example, a lamp L, power is supplied via the main switch KSW, the current bearing amount of the main switch KSW and a fuse F1 connected in series to the main switch KSW may be those of low capacities (several ampere).

To the crankshaft rotation sensor 120, the 12-V power supply is supplied via a bleed resistor R4.

Even if a short-circuit failure or the like occurs on the crankshaft rotation sensor 120 side with respect to a terminal VC, since the short-circuit current is limited by the bleed resistor R4, the power supply circuit is protected.

The pulse signal (crank rotation detection signal) 120a supplied to a terminal CP is waveform shaped by a waveform shaping circuit 107 so that it is converted into a signal of the logic amplitude of 5 V, which is supplied to an input terminal of the CPU 101a.

To the leg-power detection means 110, the 5-V power supply is supplied via a bleed resistor R5.

Even if a short-circuit failure or the like occurs on the leg-power detection means 110 side with respect to a terminal VT, since the short-circuit current is limited by the bleed resistor R5, the power supply circuit is protected.

A voltage signal 110a representative of the leg-power detection output T supplied to a terminal TS is divided by two voltage dividing circuits having different dividing ratios, and the individual divided voltages are supplied to the analog to digital converter 101c.

The dividing ratio of one of the voltage dividing circuits which is formed from a resistance R6 and another resistance R7 is set, for example, to 1/2 while the dividing ratio of the other voltage dividing circuit which is formed from a resistor R8 and another resistor R9 is set, for example, to 1/4.

The two detection voltages having different voltage dividing ratios are prepared, and the CPU 101a detects the magnitude of the detection torque based on two data obtained by analog to digital conversion. When the detection torque is low, the CPU 101a selects digital to analog conversion data of the voltage (voltage dividing ratio 1/2) supplied to an A/D input terminal A2, but when the detection torque is high, the CPU 101a selects digital to analog conversion data of another voltage (voltage dividing ratio 1/4) supplied to another A/D input terminal A3, and converts the torque taking the voltage dividing ratio into consideration.

By such construction and processing, even if the resolution of the analog to digital converter 101c is the same, a torque value can be detected with a high degree of accuracy over a wide range from a low torque to a high torque.

Since the detection output of the crankshaft rotation sensor 120 is influenced by the power supply voltage supplied thereto, by supplying a voltage, which is actually supplied to the crankshaft rotation sensor 120, to the A/D input terminal A1 and correcting the detection voltage based on digital to analog conversion data of the supplied voltage, detection of the leg-power with a higher degree of accuracy is achieved.

The voltage comparator 102b in the motor driving limitation section 102 compares the threshold voltage VTH obtained by voltage division of a voltage supplied to the leg-power detection means 110 by a resistor 102e and another resistor 102f and another voltage obtained by voltage division of the voltage 110a representative of the leg-power detection output T between a resistor R8 and another resistor R9.

Since the voltage supplied to the leg-power detection means 110 is divided to obtain the threshold voltage VTH, whether or not the leg-power exceeds a predetermined value can be discriminated with a higher degree of accuracy eliminating an influence of variation of the output voltage caused by a variation of the supplied voltage.

A motor operation permission/limitation instruction signal MS which is the output of the voltage comparator 102b is supplied to an input terminal of the CPU

The CPU 101a monitors that the condition wherein the output MS of the voltage comparator 102b is at the L level, that is, the leg-power is zero, occurs cyclically.

Then, if the condition wherein the leg-power is zero is not detected for more than a fixed period of time while the motor 18 is operating based on detection of the leg-power based on analog to digital conversion data, outputting of the PWM signal 140a is stopped to stop operation of the motor 18.

Consequently, it is prevented that unnecessary assisting torque is generated because operation of the leg-power detection system such as the crankshaft rotation sensor 120, the analog to digital converter 101c or the like is not normal.

On the other hand, when the bicycle is continued to be pedaled upon running on an upward slope or the like, the leg-power may not be reduced to zero cyclically.

Therefore, the pedaling discrimination means 130 provided in the CPU 101a reads in the leg-power T after each predetermined interval via the analog to digital converter 101c, monitors the variation amount of the leg-power T per unit time, discriminates, when the increment Δ T of the leg-power T is equal to or higher than the assist permission threshold value ΔTth set in advance, that a pedaling operation is being performed, outputs a relay driving instruction RD to operate the relay RL, and produces and outputs a motor driving signal (PWM signal) 140a to perform processing for generating assisting power (assisting force) from the motor 18. On the other hand, even if the increment ΔT of the leg-power becomes lower then the preset assist permission threshold value ΔTth, the assistance is continued for a period until after the preset delay time td elapses.

More particularly, the CPU 101a retrieves a PWM duty map based on the leg-power T detected via the analog to digital converter 101c and the speed of rotation of the crankshaft obtained by calculation from the period of the crank rotational shaft rotation pulse 120a, and produces and outputs a motor driving signal (PWM signal) 140a corresponding to a duty obtained by the retrieval.

It is to be noted that, while, in the present embodiment, the relay RL is operated when it is discriminated based on the increment ΔT of the leg-power T that the bicycle is being pedaled, the construction may be modified such that, while the main switch MSW remains in an on state, the relay RL is normally kept in an operative condition, but when it is discriminated that the bicycle is being pedaled, a motor driving signal (PWM signal) 140a is produced and outputted.

The motor driving signal (PWM signal) 140a is supplied to a FET driving circuit 106F via the logical AND circuit 102c while the output MS of the comparator 102b remains at the H level, that is, while a leg-power higher than a predetermined level is detected.

The FET driving circuit 106F supplies power to the gate of the field effect transistor FET based on the logical AND output signal 102d to drive the field effect transistor FET to perform a switching operation.

Consequently, the motor 18 is operated by PWM control.

The CPU 101a monitors based on the motor current to detect whether or not the operation of the motor 18 is proceeding normally, and when an abnormal current value is detected, the CPU 101a stops operation of the motor 18.

Upon energization of the motor, a voltage ( hereinafter referred to as FET on voltage) equal to the motor current multiplied by the on resistance of the field effect transistor FET is generated between the drain and the source of the field effect transistor FET.

An electronic switch 105a in the motor current detection circuit 105 is put into an on state in synchronism with a period of the H level of the logical AND output signal 102d and supplies an FET on voltage to a time constant circuit 105b which is formed from a resistor R10 and a capacitor C2.

The electronic switch 105a can be formed using a bipolar transistor, a field effect transistor or the like. The FET on voltage fetched in synchronism with the PWM signal is generally converted into a dc voltage (pulsating voltage) corresponding to the FET on voltage by the time constant circuit 105b.

A voltage signal 105d obtained by dc amplification of the dc voltage (pulsating voltage) by means of a voltage amplifier 105c is supplied to an A/D conversion input terminal A4 of the analog to digital converter 101c.

Then, when the motor current value based on voltage data representative of an analog to digital conversion motor current value is excessively high, the CPU 101a suppresses the energization duty low or stops operation of the motor 18.

It is to be noted that detection of the motor current may be performed based on a voltage generated across a current detecting resistor interposed in series to the field effect transistor FET. Since the present embodiment is constructed such that the FET on voltage is detected, a power loss by insertion of a current detecting resistor is not provided, and the battery power supply BAT can be utilized effectively.

Further, the CPU 101a compares data representative of the battery power supply voltage fetched via the analog to digital converter 101c and a preset remaining amount discrimination voltage value with each other, and, when the battery power supply voltage exhibits a value lower than the remaining amount discrimination voltage value, the CPU lOla generates a display output HL to cause the lamp L to be lit via a lamp driving circuit 106L so as to make an indication to urge charging.

It is to be noted that the lamp L is not energized continuously, but is dynamically lit to save the power.

The lamp L may otherwise be intermittently lit in a cycle of several seconds.

In the present embodiment, while the leg-power is equal to or lower than a predetermined value, passage of a motor driving signal outputted from the CPU is blocked by a logical AND circuit (AND gate). However, operation of the motor may be limited by cutting the power supply to the gate of the field effective transistor which controls energization of the motor.

Subsequently, torque value correction means of the main control section according to claims 3 and 4 will be described.

It is to be noted that the torque value correction means of the present invention prevents, when the electric power assisted bicycle 1 is pedaled in a stopping condition thereof (such pedaling will be hereinafter referred to as "momentary treadling"), a comparatively high leg-power (torque) from acting to cause the electric power assisted bicycle 1 to be assisted against the intention of the driver and gradually increases the assistance amount to make the driving feeling good when the electric power assisted bicycle 1 is to be caused to travel subsequently to such momentary treadling.

The torque signal correction means is constructed in the motor drive control means 140 shown in FIG. 16 and includes a memory such as a ROM, comparison discrimination means, calculation means and so forth. The torque signal correction means calculates and outputs a correction torque TH based on the discrimination output (assist permission instruction A) of the pedaling discrimination means 130 shown in FIG. 16 which discriminates a condition wherein the bicycle is being pedaled.

The memory stores an initial value TA of a torque lowest value TX set in advance and a as a torque zero point value TB when the electric power assisted bicycle 1 is stopping.

It is to be noted that the torque zero point value a in a stopping condition is set to a value a little higher than a torque TS upon "momentary treadling".

The comparison means calculates a deviation between the leg-power T (toque sensor value T) detected by the leg-power detection means 110 shown in FIG. 16 and the torque zero point value TB, calculates a correction torque TH (= T - TB) and discriminates whether or not the correction torque TH is equal to or higher than 0.

Further, the comparison means compares the torque zero point value TB and the torque lowest value TX in magnitude, and when the torque zero point value TB is equal to or higher than the torque lowest value TX, the torque zero point value TB is corrected by torque attenuation signal means so that it gradually decreases in a predetermined time, and a deviation between the torque sensor value T and the decreased corrected torque zero point value TB is calculated and a correction torque TH is outputted.

Meanwhile, the torque correction means includes torque signal attenuation means having function calculation means, and based on the discrimination output (assist permission instruction A) outputted from the pedaling discrimination means 130, the torque zero point value TB is gradually decreased from the torque zero point value a in the condition wherein the bicycle is not being pedaled (in a stopping condition) to the torque lowest value TX in the predetermined time.

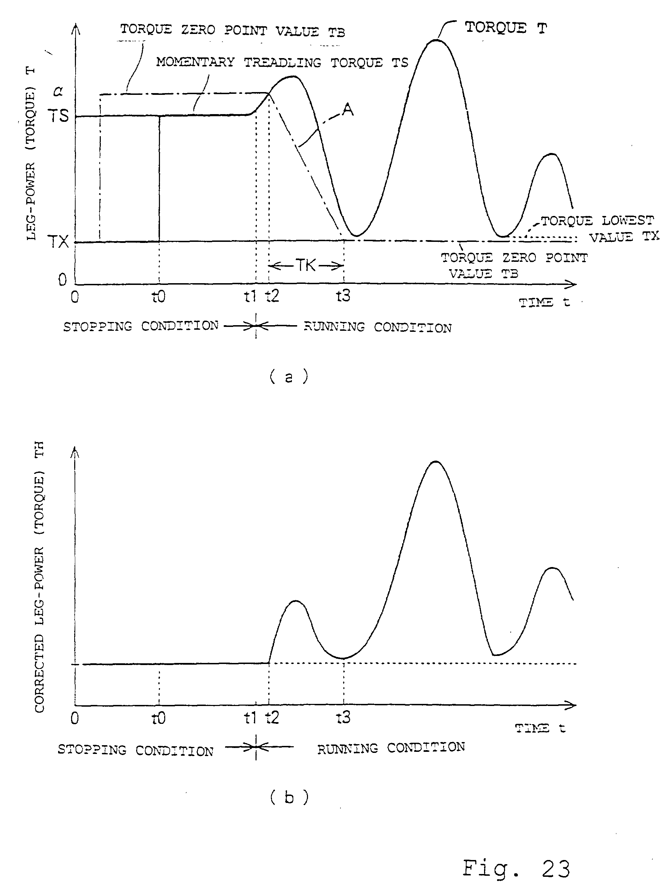

FIG. 23 is an explanatory view of the correction torque (TH) with respect to the torque (T) of the torque signal correction means.
(a) of FIG. 23 shows a time variation explanatory view of the torque (signal) T, and (b) of FIG. 23 shows a time variation explanatory view of the correction torque (signal) TH.

Referring to (a) and (b) of FIG. 23, even if the electric power assisted bicycle 1 is pedaled and a " momentary treadling" torque TS acts while the electric power assisted bicycle 1 remains in a stopping condition (from time 0 to time t1), while the torque TS is equal to or lower than the torque zero point value α set in the stopping condition, the correction torque TH is kept equal to or lower than zero.

At time tl, the electric power assisted bicycle 1 is pedaled strongly from the "momentary treadling" condition, whereupon an assist permission instruction A is detected and the electric power assisted bicycle 1 enters into a running condition. Then at time t2, the torque (sensor value) T exceeds the torque zero point value TB, whereupon a correction torque TH is outputted. However, since the torque signal attenuation means operates so that the torque zero point value TB decreases as shown by an A characteristic, the correction torque TH assumes a value equal to a difference between the torque (sensor value) T and the decreasing torque zero point value TB for the period of a predetermined time TK, and consequently, it does not exhibit a sudden increase, but increases gradually.

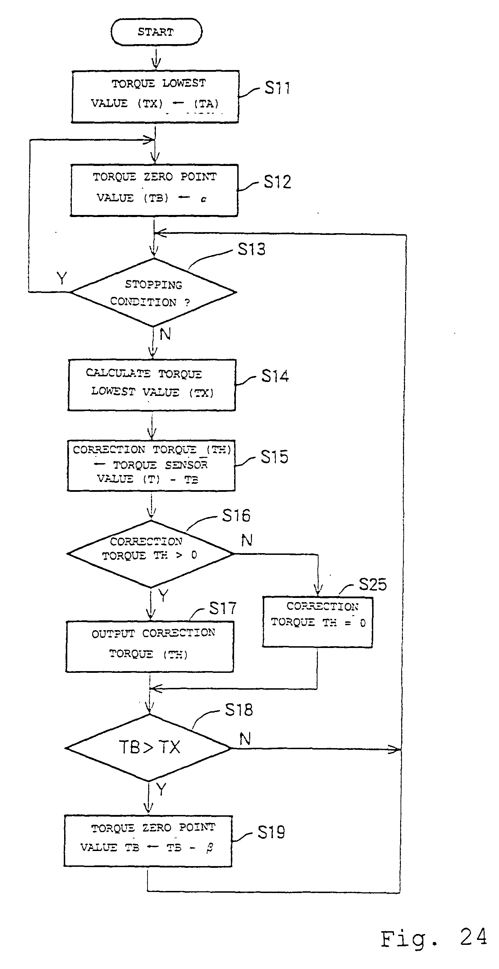

FIG. 24 is a flow chart illustrating operation of the motor drive control means according to claims 3 and 4.

After the motor drive control means 140 enters into an operative condition, first at step S11, the torque lowest value TX is set to TA, and at step S12, the torque zero point value TB as a comparatively high value for a stopping condition is set to α.

Then at step S13, it is discriminated based on the assist permission instruction A whether the electric power assisted bicycle 1 is in a stopping condition or in a running condition. If the electric power assisted bicycle 1 is in a stopping condition, then the control sequence returns to step S12 to execute step S13 again, but if the electric power assisted bicycle 1 is in an running condition, then the control sequence advances to step S14, at which a torque lowest value TX is calculated.

Then at step S15, a difference between the torque sensor value T and the torque zero point value TB is calculated to obtain a correction torque TH.

Then at step S16, it is discriminated whether or not the correction torque TH is in the positive (TH > 0), and if the correction torque TH is in the positive, the control sequence advances to step S17, at which the correction torque TH is outputted.

On the other hand, if the correction torque TH is equal to 0 or in the negative (TH ≦ 0), then the correction torque TH is set to TH = 0, and the control sequence advances to step S18, at which the discrimination whether or not the torque zero point value TB is higher than the torque lowest value TX (TB > TX) is performed. When TB > TX, the control sequence advances to step S19, at which the torque zero point value TB is decremented by a predetermined value β to obtain a new torque zero point value TB (= TB - β), whereafter the control sequence returns to step S13 so that the flow from step S13 through step S19 is repeated for the period of the predetermined time TK until TB ≦ TX is reached.

On the contrary, if TB ≦ TX is discriminated at step S18, then the control sequence returns to step S13 to repeat the flow from step S13 through step S19 again.

Since the main control section includes torque value correction means for correcting a torque zero point value based on the discrimination output when the pedaling discrimination means discriminates a condition wherein the electric power assisted bicycle is being pedaled and a deviation between a torque detected by the leg-power detection means and the corrected torque zero point value is used as a corrected torque, when a condition wherein the bicycle is not pedaled is discriminated, the torque zero point value is set to a high value so that, even if a comparatively high leg-power acts in a stopping condition of the bicycle, the assistance can be prevented to keep the stopping condition.

Further, since the torque signal correction means includes torque signal attenuation means for gradually decreasing the torque zero point value from that in a condition wherein the bicycle is not pedaled to that in another condition wherein the bicycle is pedaled in a predetermined time, the assistance amount upon transition from a stopping condition to a running condition can be increased gradually.

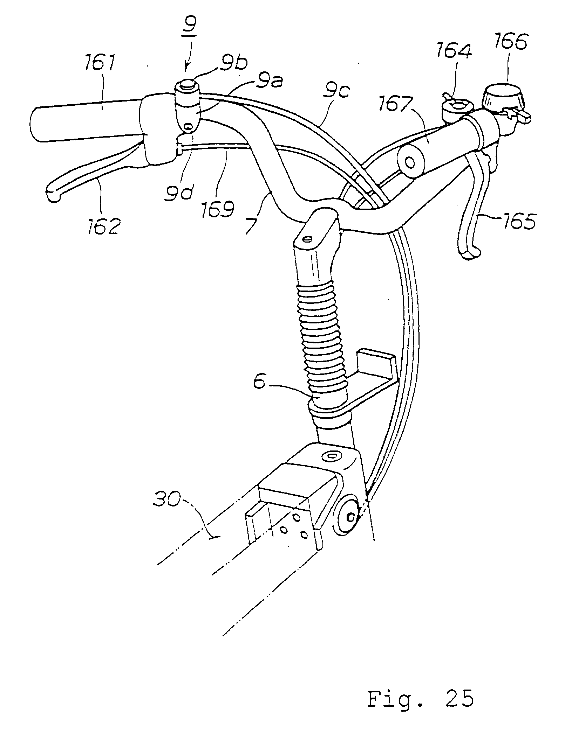

FIG. 25 shows a pushed travel switch arrangement view on the steering handle bar.

Referring to FIG. 25, the steering handle bar 7 includes, from the left to the right thereon, a grip 161, a rear brake lever 162, a pushed travel switch 9, a speed change lever 164, a bell 166, a front brake lever 165 and another grip 167.

The battery assembly 30 is provided on a rear face of the steering shaft 6. The battery assembly 30 is a member for removably holding a battery not shown.

It is possible for the left hand, which grips the grip 161, to operate the rear brake lever 162 to render a rear brake operative and also to operate the pushed travel switch 9.

Meanwhile, the speed change lever 164, the bell 166 and the front brake lever 165 are operated by the right hand gripping the grip 167, similarly as with an ordinary bicycle.

Since the manually operable parts which are repetitively operated comparatively frequently such as the speed change lever 164 and the bell 166 are arranged on the right side, there is no possibility that the pushed travel switch 9 on the left side may be operated in error.

It is to be noted that the arrangement of the bell 166 and the pushed travel switch 9 may be reversed, and in this instance, also from the fact that a comparatively great number of people is right-handed, the pushed travel switch 9 can be operated readily when the electric power assisted bicycle 1 is pushed to travel.

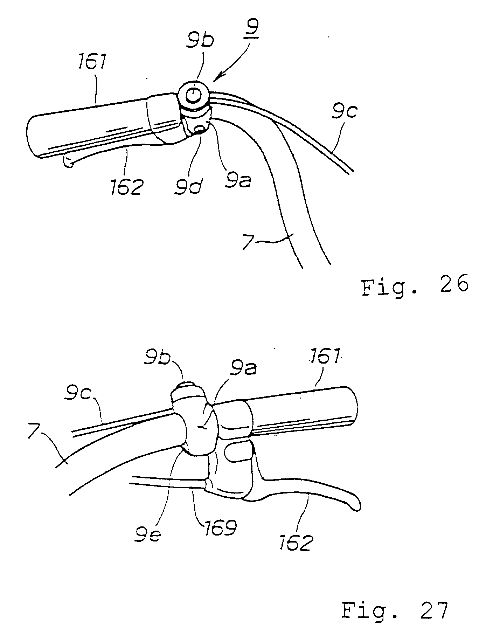

FIG. 26 shows an enlarged rear elevational view of the pushed travel switch according to the present invention.

The pushed travel switch 9 includes a switch case 9a, a push-button 9b, a cable 9c and a screw 9d.

The cable 9c extends, as shown in FIG. 26, along a brake cable 169 which extends from the rear brake lever 162, passes below a battery mounting portion 168 and connects to the control unit 100 shown in FIG. 1.

FIG. 27 shows an enlarged front elevational view of the pushed travel switch.

The switch case 9a of the pushed travel switch 9 has a divided portion 9e at a lower portion thereof and can be secured to the steering handle bar 7 by tightening a screw 6d shown in FIG. 26.

In order to remove the switch case 9a from the steering handle bar 7, the grip 161 and the rear brake lever 162 are removed first, and then the screw 9d is loosened and removed.

For the push-button switch built in the pushed travel switch 9, a push-button switch, for example, of the non-locking type having a normal break contact structure is adopted, and an on state and an off state of the switch are repeated alternately each time the push-button is operated.

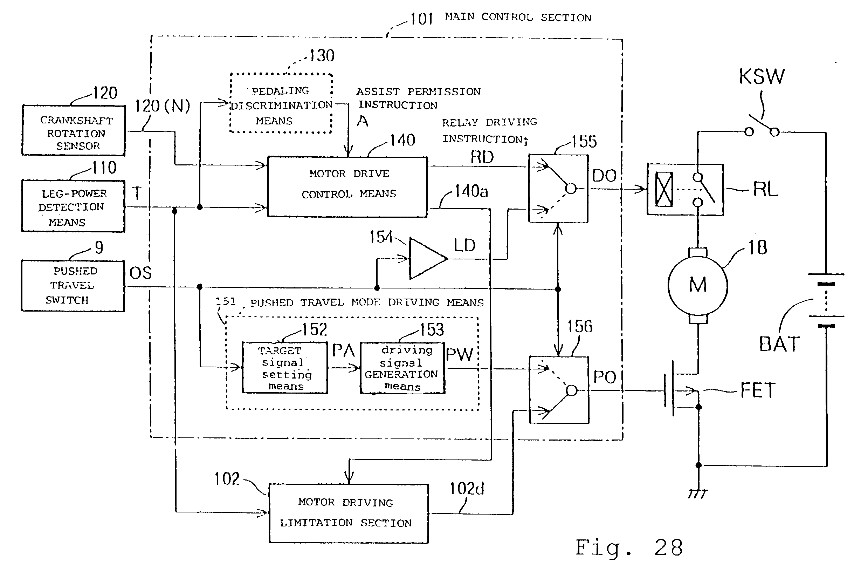

FIG. 28 is a functional block constructive view of essential part of the main control section according to claims 5 and 6.

The main control section 101 includes the pedaling discrimination means 130, the motor drive control means 140, pushed travel mode driving means 151, a relay driving buffer 154 and a pair of switching means 155 and 156.

It is to be noted that the pedaling discrimination means 130 and the motor drive control means 140 have the same constructions and operations as those shown in FIG. 16, and accordingly, description of them is omitted here.

The pushed travel mode driving means 151 includes target signal setting means 152 and driving signal generation means 153 and generates, based on pushed travel information OS supplied thereto from the pushed travel switch 9 (refer FIGS. 25 to 27), a motor driving signal PW with which a speed (for example, 1 to 2 Km per hour) rather lower than a walking speed of the driver can be obtained by the electric power assisted bicycle 1.

The target signal setting means 152 includes PWM generation means for generating a PWM (pulse width modulation) signal of a duty cycle having a small on drive pulse width and a large off drive pulse width, and supplies a PWM driving signal PA of a predetermined duty cycle to the driving signal generation means 153 based on pushed travel information OS, for example, of the H level supplied thereto from the pushed travel switch 9.

On the other hand, the target signal setting means 152 stops its generation of the PWM driving signal PA when pushed travel information OS of the L level is supplied thereto from the pushed travel switch 9.

The driving signal generation means 153 includes function generation means. The driving signal generation means 153 receives the PWM driving signal PA of the predetermined duty cycle supplied thereto from the target signal setting means 152 and supplies a motor driving signal PW to the switching means 156 to gradually increase the on drive pulse width from 0 to DU (for example, a fixed value of 20 % of the duty cycle) which corresponds to the predetermined duty cycle in the predetermined time TX.

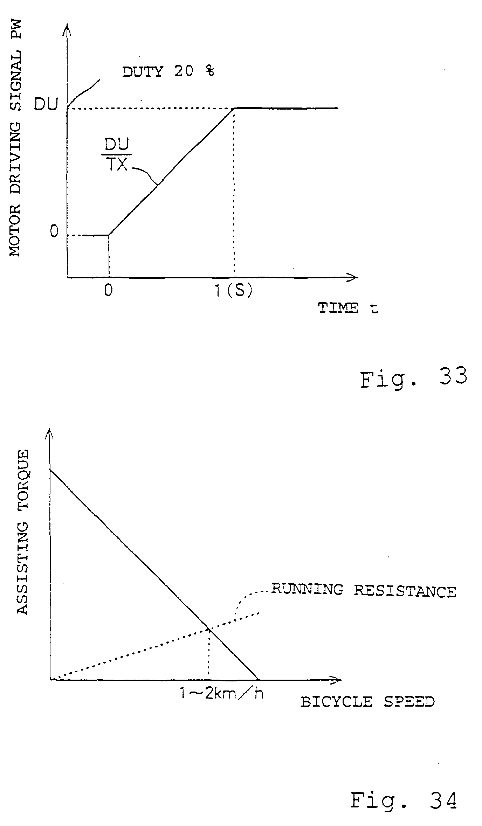

FIG. 33 shows a time characteristic diagram of the motor driving signal (PW) of the driving signal increasing means.

Referring to FIG. 33, the motor driving signal PW exhibits an increase in duty cycle thereof in a linear function of the gradient (DU/DX) from time 0 to time TX (for example, 1 sec) as time passes, and, after the predetermined time TX passes, the motor driving signal PW exhibits the predetermined duty cycle DU (20 % fixed value).

FIG. 34 illustrates a relation diagram between the bicycle speed and the assisting torque.

If the pushed travel switch 9 is depressed, then the assisting torque increases suddenly, but as the bicycle speed increases, the assisting torque decreases. Then, at a point at which the assisting torque and the travel resistance cross each other, a fixed bicycle speed of 1 to 2 Km/h is reached.

The relay driving buffer 154 converts the pushed travel information OS (for example, of the H level) supplied thereto from the pushed travel switch 9 into a relay driving signal LD of a current capacity required to drive the relay RL, and supplies the relay driving signal LD to the switching means 155.

The switching means 155 and the switching means 156 are each formed from, for example, an electronic switch and perform connection switching based on the pushed travel information OS supplied thereto from the pushed travel switch 9.

The switching means 155 switches between a relay driving instruction RD supplied thereto from the motor drive control means 140 and the relay driving signal LD supplied thereto from the relay driving buffer 154, and outputs a relay driving signal DO to drive the relay RL.

The switching means 155 selects the relay driving signal LD when the pushed travel information OS supplied thereto from the pushed travel switch 9 is at the H level, but selects the relay driving instruction RD when the pushed travel information OS is at the L level.

The switching means 156 switches between an output signal 102d supplied thereto from the motor driving limitation section 102 and the motor driving signal PW supplied thereto from the driving signal increasing means 153 and outputs an FET driving signal PO in the form of a PWM signal to drive the FET (field effect transistor).

The switching means 156 selects the motor driving signal PW when the pushed travel information OS supplied thereto from the pushed travel information OS is at the H level, but selects the output signal 102d when the pushed travel information OS is at the L level.

Since the main control section 101 includes the pushed travel mode driving means 151 and the switching means 155 and 156, if the pushed travel switch 9 is operated to an on state, then the relay driving instruction RD which is generated when the bicycle is pedaled and the output signal 102d are switchable replaced by the relay driving signal LD and the motor driving signal PW, respectively, and the motor driving signal PW can be gradually increased to the predetermined duty cycle in the predetermined time TX to drive the motor. Consequently, also when the electric power assisted bicycle 1 is pushed to travel, the power of the motor can be used for assistance.

Since the main control section includes pushed travel mode driving means and the motor is driven by a motor driving signal of a predetermined duty cycle based on information from the pushed travel switch in this manner, the electric power assisted bicycle can be assisted so as to travel at a speed conforming to the walking speed.

Further, since the pushed travel mode driving means includes drive signal increasing means for gradually increasing a motor driving signal in a predetermined time, even if the pushed travel mode switch is depressed, the bicycle does not immediately enter into a pushed travel mode, but the assisting force gradually increases. Consequently, a natural pushed travel mode can be realized.

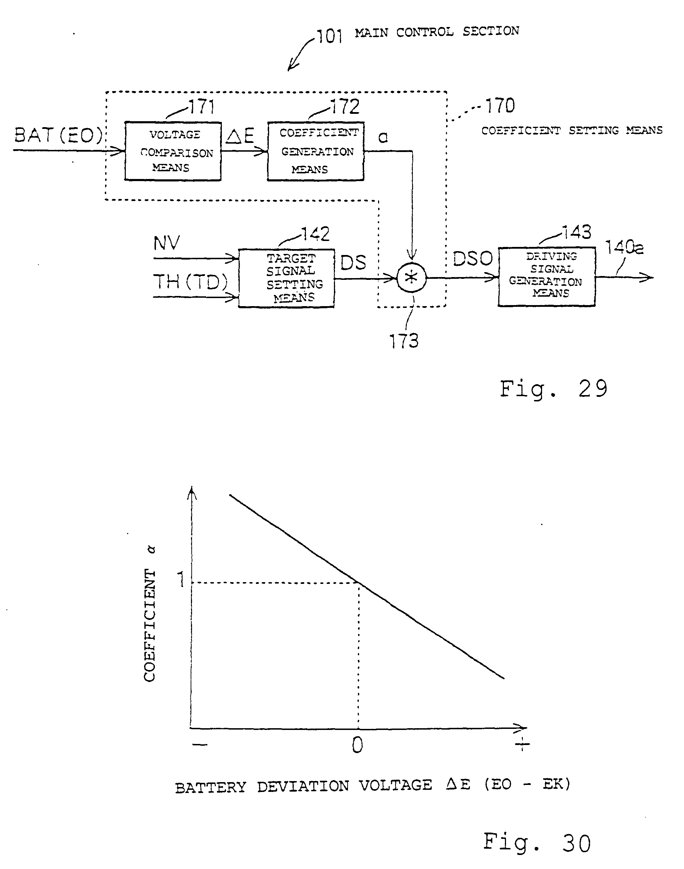

FIG. 29 is a functional block constructive view of essential part of the main control section according to claim 7.

The main control section 101 includes, between target signal setting means 142 and driving signal generation means 143 provided in the motor drive control means 140 shown in FIG. 16, coefficient setting means 170 for correcting a target signal DS in response to a variation of the battery power supply BAT (voltage EO), and corrects the target signal DS with a coefficient α corresponding to a deviation voltage ΔE (= EO - EK) between an arbitrary voltage EO of the battery power supply BAT and a reference voltage EK to correct the duty cycle of a PWM signal (motor driving signal 140a) to be generated by the driving signal generation means 143.

The coefficient setting means 170 includes voltage comparison means 171, coefficient generation means 172 and multiplication means 173.

The voltage comparison means 171 includes comparison means, deviation calculation means and a memory such as a ROM. The voltage comparison means 171 compares the battery voltage EO supplied thereto from the battery power supply BAT and the reference voltage EK set in the memory in advance with each other to calculate the deviation voltage ΔE (= EO - EK) between the battery voltage EO and the reference voltage EK and supplies the deviation voltage signal ΔE to the coefficient generation means 172.

The battery voltage EO of the battery power supply BAT exhibits a different voltage value immediately after the battery power supply BAT is charged up fully or when the electric power assisted bicycle 1 is continuously driven. Immediately after the battery power supply BAT is charged up fully, the battery voltage EO exhibits a value higher than its nominal value (reference voltage EK), but after the electric power assisted bicycle 1 is continuously driven, the battery voltage EO exhibits a value lower than the nominal value (reference voltage EK).

Since the driving signal generation means 143 which generates the motor driving signal 140a is driven by a fixed voltage (for example, 5 V) lower than the battery voltage EO, it generates a PWM signal of a normally fixed pulse wave height value without being influenced by any variation of the battery voltage EO. Consequently, when the battery voltage EO is high, high motor current flows through the motor 18, which is PWM driven by the battery voltage EO via the FET (field effect transistor), so that a higher driving force than that generated with the nominal value (= reference voltage EK) is generated.

On the other hand, when the battery voltage EO is low, low motor current flows, and a driving force lower than that produced with the nominal value (= reference voltage EK) is generated.

The coefficient generation means 172 includes a memory such as a ROM and sets correspondence data illustrated in a characteristic diagram of the battery deviation voltage (ΔE) and the coefficient (α) of FIG. 30 in advance. The coefficient generation means 172 reads out a coefficient α corresponding to the deviation voltage signal ΔE (= EO - EK) supplied thereto from the voltage comparison means 171 and supplies the coefficient signal α to the multiplication means 173.

As illustrated in FIG. 30, the coefficient α is set so as to decrease as the battery deviation voltage ΔE increases.

For example, when the battery deviation voltage Δ E is 0, the coefficient α is set to 1 (α = 1); when the battery deviation voltage ΔE is in the negative (-1), the coefficient α is set to a value higher than 1 (α > 1) ; when the battery deviation voltage ΔE is in the positive (+1), the coefficient α is set to a positive value lower than 1 (0 < α < 1).

The multiplication means 173 has a multiplication function. The multiplication means 173 thus multiplies the target signal DS supplied thereto from the target signal setting means 142 and the coefficient signal α supplied thereto from the coefficient generation means 172 and supplies a correction target signal DSO to the driving signal generation means 143.

Since the driving signal generation means 143 generates a PWM signal of a duty cycle corresponding to the correction target signal DSO, a PWM signal of a duty cycle corresponding to the target signal DS is converted into a PWM signal of a duty cycle corresponding to the arbitrary voltage EO of the battery power supply BAT and is supplied as a motor driving signal 140a to the FET (field effect transistor).

Accordingly, the current flowing through the motor 18 can be kept to a value equal to the value of the current obtained with the nominal value (= reference voltage EK) even if the voltage EO of the battery power supply BAT varies.

Meanwhile, the counting setting means can be constructed otherwise such that it generates a duty cycle DU corresponding to the battery voltage EO and the duty cycle of the driving signal generation means 143 shown in FIG 29 is corrected with the duty cycle DU.

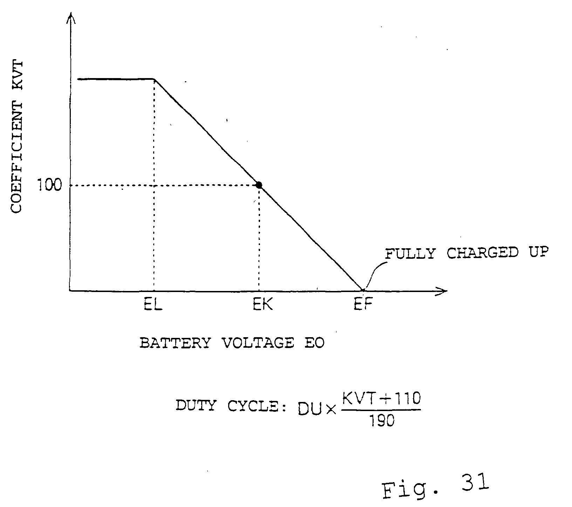

FIG. 31 shows a characteristic diagram of the battery voltage (EO) and the coefficient (KVT) for varying the duty cycle.

If the battery voltage EO varies with respect to the nominal value EK (coefficient KVT = 100), then the coefficient KVT is increased when the battery voltage EO is a voltage value EL lower than the EK, but the coefficient KVT is decreased when the battery voltage EO is a voltage value EF of a charged up condition lower than the nominal value EK.

The duty cycle is corrected against the variation of the battery voltage EO based on an operation expression illustrated in FIG. 31 using the coefficient KVT.

Since the main control section includes coefficient setting means for correcting the duty cycle of a motor driving signal based on a deviation between a battery power supply and a standard voltage in this manner, by controlling the pulse width of the driving signal such that, if the battery power supply becomes higher, then the pulse width is reduced, but if the battery power supply becomes lower, then the pulse width is increased, the assistance amount equal to that obtained when the battery power supply has the nominal value can be derived.

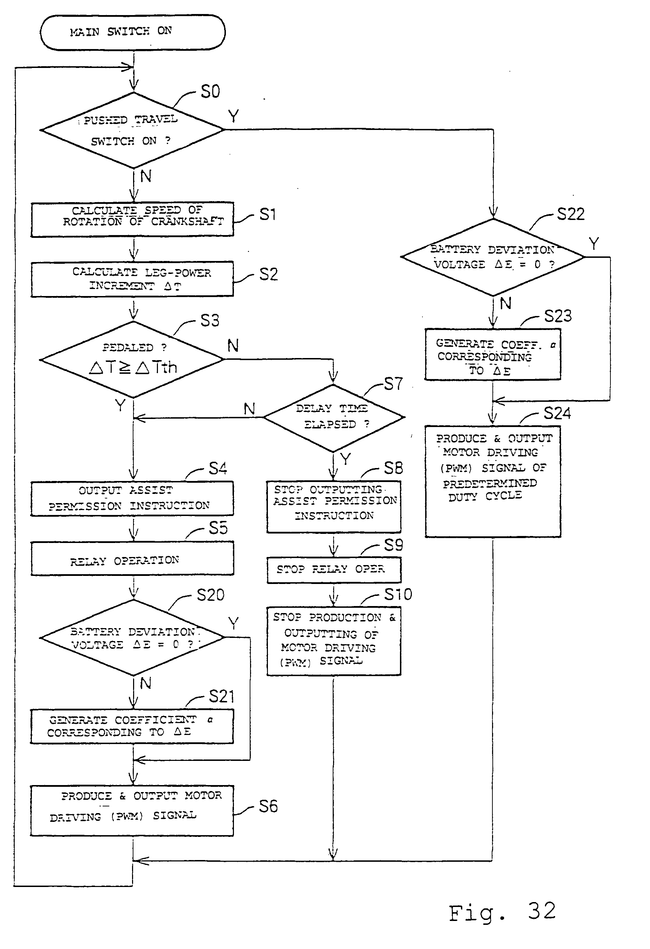

FIG. 32 is a flow chart illustrating operation of the main control section according to claims 5 to 7.

Since steps S1 to S10 in the flow chart of FIG. 32 are the same as those in the flow chart shown in FIG. 19, description of them is omitted here.

Steps S0 and S24 indicate an operation flow of a pushed travel mode, and steps S20, S21, S22 and S23 indicate an operation flow for variation correction of the battery power supply.

In the operation flow of a pushed travel mode, at step S0, it is discriminated whether or not the pushed travel switch is operated to an on state. If the pushed travel switch is not operated to an on state, then the operation flow of steps S1 to S10 (refer to the description of FIG. 19) is executed, but if the pushed travel switch is operated to an on state, the control sequence advances to step S22.

First at step S22, it is discriminated whether or not the battery deviation voltage ΔE is equal to the nominal value (= reference voltage EK). If the battery deviation voltage ΔE is equal to the nominal value (ΔE = 0), then the control sequence advances to step S24, but if the battery deviation voltage ΔE is not equal to the nominal value (ΔE < 0 or ΔE > 0), the control sequence advances to step S23.

At step S23, a coefficient a corresponding to the battery deviation voltage ΔE is generated, whereafter the control sequence advances to step S24.

At step S24, a motor driving signal of a pushed travel mode of a predetermined cycle corresponding to the battery deviation voltage △E which is equal to 0 ( coefficient α = 1) or is not equal to 0 (coefficient α > 1 or 0 < *α* < 1) is generated.

On the other hand, it is discriminated at step S20 whether or not the battery deviation voltage ΔE is equal to the nominal value (= reference voltage EK). If the battery deviation voltage ΔE is equal to the nominal value (ΔE = 0), then the control sequence returns to step S6, but if the battery deviation voltage ΔE is not equal to the nominal value (ΔE < 0 or ΔE > 0), the control sequence advances to step S21.

At step S21, a coefficient a corresponding to the battery deviation voltage ΔE is generated, whereafter the control sequence returns to step S6.

At step S6, a motor driving signal of an ordinary mode, in which the bicycle is pedaled to generate leg-power, corresponding to the battery deviation voltage ΔE which is equal to 0 (coefficient α = 1) or is not equal to 0 (coefficient α > 1 or 0 < α < 1) is generated.

To provide an electric power assisted bicycle which is high in convenience owing to provision of a pushed travel mode and superior in driving feeling and realizes a stabilized assistance performance.

An electric power assisted bicycle 1 includes a control unit 100 which includes a main control section 101 which in turn includes pedaling discrimination section 130 including leg-power variation amount calculation means 131, assist discrimination means 132 and delay timer means 133, and motor driving control means 140, and a motor driving limitation section 102.

## Claims

1. An electric power assisted bicycle, including:
a motor (18) for assisting human power running of said bicycle (1), and a main control section (101) for controlling driving of said bicycle (1), said main control section (101) comprising:
- leg-power detection means (110) for detecting the leg-power currently applied to pedals of said bicycle (1),
- pedaling discrimination means (130) for discriminating whether the bicycle is pedaled or not,
wherein said main control section (101) controls driving said motor (18) by means of a motor driving signal (140a) based on an output (A) of said pedaling discrimination means (130),
**characterized in**
that said pedaling discrimination means (130) comprises:
- leg-power variation amount calculation means (131) for calculating a leg-power increment (ΔT) defined by the difference between a currently detected leg-power value (T) and a precedingly detected leg-power value, and
- assist discrimination means (132) for comparing the calculated leg-power increment (ΔT) with an increment threshold value (ΔTth),
wherein said pedaling discrimination means (130) discriminates that the bicycle (1) is pedaled when the leg-power increment (ΔT) is equal to or higher than said increment threshold value (ΔTth) and discriminates that the bicycle (1) is not pedaled when the leg-power increment (ΔT) is smaller than said increment threshold value (ΔTth).

2. An electric power assisted bicycle according to claim 1,
**characterized by**
a motor driving limitation section (102) which compares the currently detected leg-power value (T) with a predetermined leg-power threshold value (VTH) and controls driving said motor (18) based on said motor driving signal (140a, 102d) when the currently detected leg-power value (T) exceeds said leg-power threshold value (VTH) and inhibits said motor (18) when the currently detected leg-power value (T) does not exceed said leg-power threshold value (VTH).

3. An electric power assisted bicycle according to claim 1 or 2, characterized in that it comprises delay timer means (133) for keeping the discrimination output of a condition in which said electric power assisted bicycle (1) is being pedaled for a time after it is discriminated that said electric power assisted bicycle (1) is not in a pedaled condition until a predetermined delay time elapses.

4. An electric power assisted bicycle according to one of claims 1 to 3, characterized in that said main control section (101) includes torque value correction means for correcting a torque zero point value (TB) based on the discrimination output when said pedaling discrimination means (130) discriminates a condition wherein said electric power assisted bicycle (1) is being pedaled, and a deviation between a torque detected by said leg-power detection means (110) and the corrected torque zero point value (TB) is used as a corrected torque.

5. An electric power assisted bicycle according to claim 4, characterized in that said torque value correction means includes torque value attenuation means for gradually decreasing the torque zero point value (TB) from that in a condition wherein said electric power assisted bicycle (1) is not pedaled to that in another condition wherein said electric power assisted bicycle (1) is pedaled in a predetermined time.

6. An electric power assisted bicycle according to one of claims 1 to 5, characterized in that said main control section includes pushed travel mode driving means (151), and said motor (18) is driven by a motor driving signal (PW) of a predetermined duty cycle based on information from a pushed travel switch (9).

7. An electric power assisted bicycle according to claim 6, characterized in that said pushed travel mode driving means (151) includes driving signal increasing means (153) for gradually increasing the motor driving signal (PW) in a predetermined time.

8. An electric power assisted bicycle according to one of claims 1 to 7, characterized in that said main control section includes coefficient setting means (170) for correcting a duty cycle of a motor diving signal based on a deviation between a battery power supply and a standard voltage.

## Patentansprüche

1. Durch Elektroantrieb unterstütztes Fahrrad, umfassend
einen Motor (18) zum Unterstützen eines Menschenkraft-Betriebs des Fahrrads (1), und einen Haupt-Steuer/Regel-Bereich (101) zum Steuern/Regeln des Antriebs des Fahrrads (1), wobei der Haupt-Steuer/Regel-Bereich (101) umfasst:
- ein Beinkraft-Erfassungsmittel (110) zum Erfassen der gegenwärtig auf die Pedale des Fahrrads (1) aufgebrachten Beinkraft,
- ein Pedalantrieb-Entscheidungsmittel (130) zum Entscheiden, ob das Fahrrad pedalangetrieben ist oder nicht,
wobei der Haupt-Steuer/Regel-Bereich (101) den Betrieb des Motors (18) mittels eines Motorantriebsignals (140a) auf Grundlage einer Ausgabe (A) des Pedalantrieb-Entscheidungsmittels (130) steuert/regelt,
**dadurch gekennzeichnet,**
dass das Pedalantrieb-Entscheidungsmittel (130) umfasst:
- ein Beinkraftschwankungsgrößen-Berechnungsmittel (131) zum Berechnen eines Beinkraft-Inkrements (ΔT), das durch die Differenz zwischen einem gegenwärtig erfassten Beinkraftwert (T) und einem vorangehend erfassten Beinkraftwert bestimmt ist, und
- ein Unterstützungs-Entscheidungsmittel (132) zum Vergleichen des berechneten Beinkraft-Inkrements (ΔT) mit einem Inkrement-Schwellenwert (ΔTth),
wobei das Pedalantrieb-Entscheidungsmittel (130) entscheidet, dass das Fahrrad (1) pedalangetrieben ist, wenn das Beinkraft-Inkrement (ΔT) gleich oder größer als der Inkrement-Schwellenwert (ΔTth) ist, und entscheidet, dass das Fahrrad (1) nicht pedalangetrieben ist, wenn das Beinkraft-Inkrement (ΔT) kleiner als der Inkrement-Schwellenwert (ΔTth) ist.

2. Durch Elektroantrieb unterstütztes Fahrrad nach Anspruch 1,
**gekennzeichnet durch**
einen Motorantrieb- Begrenzungsbereich (102), welcher den gegenwärtig erfassten Beinkraftwert (T) mit einem vorbestimmten Beinkraft-Schwellenwert (VTH) vergleicht und den Betrieb des Motors (18) auf Grundlage des Motorantriebsignals (140a, 102d) steuert/regelt, wenn der gegenwärtig erfasste Beinkraftwert (T) den Beinkraft-Schwellenwert (VTH) übersteigt, und den Motor (18) hemmt, wenn der gegenwärtig erfasste Beinkraftwert (T) den Beinkraft-Schwellenwert (VTH) nicht übersteigt.

3. Durch Elektroantrieb unterstütztes Fahrrad nach Anspruch 1 oder 2,
**dadurch gekennzeichnet,**
dass es ein Verzögerungszeitgebermittel (133) umfasst, um die Entscheidungsausgabe eines Zustands, in welchem das durch Elektroantrieb unterstützte Fahrrad (1) pedalangetrieben ist, über einen Zeitraum zurückzuhalten, nachdem entschieden wurde, dass das durch Elektroantrieb unterstützte Fahrrad sich nicht in einem pedalangetriebenen Zustand befindet, bis die vorbestimmte Verzögerungszeit abläuft.

4. Durch Elektroantrieb unterstütztes Fahrrad nach einem der Ansprüche 1 bis 3,
**dadurch gekennzeichnet,**
dass der Haupt-Steuer/Regel-Bereich (101) ein Drehmomentwert-Korrekturmittel umfasst zum Korrigieren eines Drehmomentnullpunktwerts (TB) auf Grundlage der Entscheidungsausgabe, wenn das Pedalantrieb-Entscheidungsmittel (130) einen Zustand erfasst, in welchem das durch Elektroantrieb unterstützte Fahrrad (1) pedalangetrieben ist, und dass eine Abweichung zwischen einem durch das Beinkraft-Erfassungsmittel (110) erfassten Drehmoment und dem korrigierten Drehmomentnullpunktwert (TB) als korrigiertes Drehmoment verwendet wird.

5. Durch Elektroantrieb unterstütztes Fahrrad nach Anspruch 4,
**dadurch gekennzeichnet,**
dass das Drehmomentwert-Korrekturmittel ein Drehmomentwert-Reduzierungsmittel umfasst, um den Drehmomentnullpunktwert (TB) von demjenigen Wert in einem Zustand, in welchem das durch Elektroantrieb unterstützte Fahrrad (1) nicht pedalangetrieben ist, zu demjenigen Wert in einem Zustand, in welchem das durch Elektroantrieb unterstützte Fahrrad (1) pedalangetrieben ist, in einem vorbestimmten Zeitraum schrittweise zu verkleinern.

6. Durch Elektroantrieb unterstütztes Fahrrad nach einem der Ansprüche 1 bis 5,
**dadurch gekennzeichnet,**
dass der Haupt-Steuer/Regel-Bereich ein Schiebebewegungsmodus-Treibermittel (151) umfasst und der Motor durch ein Motorantriebsignal (PW) eines vorbestimmten Einschaltzyklus auf Grundlage einer Information von dem Schiebebewegungsschalter (9) betrieben wird.

7. Durch Elektroantrieb unterstütztes Fahrrad nach Anspruch 6,
**dadurch gekennzeichnet,**
dass das Schiebebewegungsmodus-Treibermittel (151) ein Treibersignal-Vergrößerungsmittel (153) umfasst zum schrittweisen Vergrößern des Motorantriebsignals (PW) in einem vorbestimmten Zeitraum.

8. Durch Elektroantrieb unterstütztes Fahrrad nach einem der Ansprüche 1 bis 7,
**dadurch gekennzeichnet,**
dass der Haupt-Steuer/Regel-Bereich ein Koeffizienten-Festlegemittel (170) umfasst, um einen Einschaltzyklus eines Motorantriebsignals auf Grundlage einer Abweichung zwischen einer Batterie-Energieversorgung und einer Standardspannung zu korrigieren.

## Revendications

1. Bicyclette à assistance électrique, comprenant :
un moteur (18) servant à assister la propulsion avec la force humaine de ladite bicyclette (1), et
une partie de commande principale (101) servant à commander l'entraînement de ladite bicyclette (1),
ladite partie de commande principale (101) comprenant :
- un moyen (110) de détection de la force des jambes servant à détecter la force des jambes appliquée actuellement aux pédales de ladite bicyclette (1),
- un moyen (130) de discrimination de pédalage servant à déterminer si le cycliste pédale ou non sur la bicyclette,
ladite partie de commande principale (101) commandant la marche dudit moteur (18) au moyen d'un signal (140a) de commande de moteur en fonction d'une sortie (A) dudit moyen (130) de discrimination de pédalage,
**caractérisé en ce que**
ledit moyen (130) de discrimination de pédalage comprend :
- un moyen (131) de calcul de la valeur de la variation de la force des jambes servant à calculer un incrément (ΔT) de force des jambes défini par la différence entre une valeur (T) de force des jambes détectée actuellement et une valeur de force des jambes détectée précédemment, et
- un moyen (132) de discrimination d'assistance servant à comparer l'incrément (ΔT) de force des jambes calculé à une valeur (ΔTth) de seuil d'incrément,
ledit moyen (130) de discrimination de pédalage déterminant que le cycliste pédale sur la bicyclette (1) lorsque l'incrément (ΔT) de force des jambes est égal ou supérieur à ladite valeur (ΔTth) de seuil d'incrément et déterminant que le cycliste ne pédale sur la bicyclette (1) lorsque l'incrément (ΔT) de force des jambes est inférieur à ladite valeur (ΔTth) de seuil d'incrément.

2. Bicyclette à assistance électrique selon la revendication 1,
**caractérisée par**
une partie (102) de limitation de commande de moteur qui compare la valeur (T) de la force des jambes détectée actuellement à une valeur prédéterminée (VTH) de seuil de force des jambes et commande la marche dudit moteur (18) en fonction dudit signal (140a, 102d) de commande de moteur lorsque la valeur (T) de la force des jambes détectée actuellement dépasse ladite valeur (VTH) de seuil de force des jambes et bloque ledit moteur (18) lorsque la valeur (T) de force des jambes détectée actuellement ne dépasse pas ladite valeur (VTH) de seuil de force des jambes.

3. Bicyclette à assistance électrique selon la revendication 1 ou 2, caractérisée en ce qu'elle comprend un moyen (133) de minuterie de retard servant à conserver la sortie de discrimination d'un état dans lequel le cycliste pédale sur ladite bicyclette à assistance électrique (1) pendant un certain temps après qu'il a été déterminé que ladite bicyclette à assistance électrique (1) n'est pas dans un état où le cycliste appuie sur les pédales tant qu'un temps de retard prédéterminé ne s'est pas écoulé.

4. Bicyclette à assistance électrique selon l'une des revendications 1 à 3, caractérisée en ce que ladite partie de commande principale (101) comprend un moyen de correction de valeur de couple servant à corriger une valeur (TB) de point zéro de couple en fonction de la sortie de discrimination lorsque ledit moyen (130) de discrimination de pédalage détermine un état où le cycliste pédale sur ladite bicyclette à assistance électrique (1), et qu'un écart entre un couple détecté par ledit moyen (110) de détection de force des jambes et la valeur (TB) de point zéro de couple corrigée est utilisé comme couple corrigé.

5. Bicyclette à assistance électrique selon la revendication 4, caractérisée en ce que ledit moyen de correction de valeur de couple comprend un moyen d'atténuation de valeur de couple servant à diminuer graduellement la valeur (TB) du point zéro de couple de celle existant dans un état, où le cycliste ne pédale pas sur ladite bicyclette à assistance électrique (1), à celle existant dans un autre état, où le cycliste pédale sur ladite bicyclette à assistance électrique (1), dans un temps prédéterminé.

6. Bicyclette à assistance électrique selon l'une des revendications 1 à 5, caractérisée en ce que ladite partie de commande principale comprend un moyen (151) d'entraînement en mode de déplacement poussé, et que ledit moteur (18) est commandé par un signal (PW) de commande de moteur d'un cycle opératoire prédéterminé en fonction des informations provenant d'un commutateur (9) de déplacement poussé.

7. Bicyclette à assistance électrique selon la revendication 6, caractérisée en ce que ledit moyen (151) d'entraînement en mode de déplacement poussé comprend un moyen (153) d'augmentation du signal de commande servant à augmenter graduellement le signal (PW) de commande de moteur dans un temps prédéterminé.

8. Bicyclette à assistance électrique selon l'une des revendications 1 à 7, caractérisée en ce que ladite partie de commande principale comprend un moyen (170) de réglage des coefficients servant à corriger un cycle opératoire d'un signal de commande de moteur en fonction d'un écart entre une alimentation par batterie et une tension normale.
